(19) Europäisches Patentamt
European Patent Office
Office européen des brevets

(11) **EP 2 023 505 B1**

(12) **EUROPÄISCHE PATENTSCHRIFT**

(45) Veröffentlichungstag und Bekanntmachung des Hinweises auf die Patenterteilung:
**27.07.2016 Patentblatt 2016/30**

(51) Int Cl.:
***H04B 7/08*** *(2006.01)*

(21) Anmeldenummer: **08004534.7**

(22) Anmeldetag: **12.03.2008**

(54) **Empfangsanlage mit einer Schaltsanordnung zum Unterdrücken von Umschaltsstörungen bei Antennendiversity**

Receiver array with a switching device for reducing switching malfunctions during antenna diversity

Installation de réception dotée d'un agencement de commutation destiné à supprimer des défauts de commutation dans une diversité d'antennes

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.04.2007 DE 102007017478**

(43) Veröffentlichungstag der Anmeldung:
**11.02.2009 Patentblatt 2009/07**

(73) Patentinhaber: **Delphi Delco Electronics Europe GmbH**
**42119 Wuppertal (DE)**

(72) Erfinder:
• **Lindenmeier, Stefan**
  **82131 Gauting (DE)**

• **Lindenmeier, Heinz**
  **82152 Planegg (DE)**
• **Reiter, Leopold**
  **82205 Gilching (DE)**
• **Hopf, Jochen**
  **85540 Haar (DE)**

(74) Vertreter: **Manitz, Finsterwald & Partner GbR**
**Postfach 31 02 20**
**80102 München (DE)**

(56) Entgegenhaltungen:
**EP-A1- 0 714 178        EP-A2- 1 763 151**
**US-A1- 2007 049 227**

**Beschreibung**

EP 0714178 A1 beschreibt ein Mehrantennern-Empfangsanlagen bei der niederfrequente Steuersignale über eine Hochfrequenzleitung zwischen einem Diversity-Modul an der Antennenanlage und dem räumlich getrennten Empfänger ausgetauscht werden. Weitere Antennediversity-Empfangsanlagen sind z.B. aus der DE 3517247 A1 bekannt. Bei der dort beschriebenen Antennendiversity-Empfangsanlage zur Elimination von Störungen ist einem Diversity-Prozessor eine Anzahl von Antennensignalen zugeführt, von denen zu jedem Zeitpunkt ein ausgewähltes Antennensignal zum Empfänger durchgeschaltet ist. Dieses hochfrequente Signal wird im Empfänger in den Zwischenfrequenzbereich ZF umgesetzt und dieses Signal dem Diversity-Prozessor zur Erkennung von Störungen zugeführt. Bei Erkennung einer Störung werden im Diversity-Prozessor Schaltsignale zum Umschalten auf ein anderes Antennensignal A1...AN abgeleitet, welche im Antennenumschalter die Umschaltung bewirkt. Mit dem Umschaltvorgang ist im Allgemeinen im Hochfrequenzzweig ein Amplituden- bzw. Phasensprung verbunden. Diese Umschaltung kann bei nicht ausreichender Störunterdrückung im Niederfrequenzbereich zu hörbaren Schaltgeräuschen führen. Deshalb wird in der DE 3517247 vorgeschlagen, die im Diversity-Prozessor gebildeten Umschaltimpulse auch zur Steuerung einer Sample- und Holdschaltung im Audio -Zweig zu verwenden. Ist der Diversity-Prozessor im Empfänger enthalten, so kann die Verbindung zwischen Diversity-Prozessor und Empfänger ohne großen Aufwand hergestellt werden. Eine weitere Schaltungsanordnung zur Unterdrückung von Umschaltstörungen im Audiofrequenzbereich beim Empfang frequenzmodulierter Tonsignale mit einem Mehrantennen-Scanning-Diversity-System ist aus der DE 42 04 490 bekannt. Bei dieser Schaltung ist die Mitbenutzung einer, der für die Funktionsfähigkeit des Diversity-Systems erforderlichen und bereits vorhandenen Verbindungsleitungen zwischen dem Diversity-Prozessor 1 und dem Empfänger 4 vorgesehen. Dabei werden die Umschaltimpulse als einfache Spannungsimpulse zusätzlich über eine dieser Verbindungsleitungen der Störunterdrückungsschaltung im Empfänger über Selektionsmittel in der Weise zugeführt, dass die übrigen, über diese Leitungen übertragenen Signale nicht gestört werden.

Diesen bekannten Schaltungsanordnungen ist allen gemeinsam, dass die exakte Gleichzeitigkeit des Umschaltimpulses zur Auslösung der Störunterdrückung in der Störunterdrückungsschaltung und das Auftreten der Störung im Audiosignal nur sehr schwer hergestellt werden kann. Dies ist in der Hauptsache bedingt durch die Retardierung der Empfangssignale, welche zwangsläufig durch die Frequenzbegrenzung auf die Kanalbandbreite des Empfängers und die anschließende Begrenzung auf die Audiofrequenzbandbreite sowie durch mögliche Verzögerungen in einem digitalen Signalprozessor gegeben ist. Bei statisch vorgegebener Frequenzbandbegrenzung durch das Kanalbandfilter kann der Laufzeitausgleich grundsätzlich hergestellt werden, er ist jedoch mit Schwierigkeiten verbunden. Bei modernen Empfängern, welche zum Schutz gegen Nachbarkanalstörungen mit einer dynamischen Bandbreitenregelung ausgestattet sind, ist dieser Laufzeitausgleich naturgemäß unmöglich. Durch die zeitlich ungenaue Auslösung der Störunterdrückung in der Störunterdrückungsschaltung können die durch die Umschaltung hervorgerufenen Störungen nicht ausreichend unterdrückt werden, so dass die Maßnahmen unwirksam werden.

Aufgabe der Erfindung ist es deshalb, bei einer Empfangsanlage nach dem Oberbegriff des Anspruchs 1 die Gleichzeitigkeit der durch den Umschaltimpuls veranlassten Auslösung der Störunterdrückung in der Störunterdrückungsschaltung und das Auftreten der Störung im Audiosignal herzustellen, so dass eine deutliche Reduktion der mit der Umschaltung der Antennensignale einhergehenden Störung gegeben ist.

Diese Aufgabe wird durch eine Empfangsanlage gemäß Anspruch 1 gelöst.

Ausführungsbeispiele der Erfindung sind in den folgenden Figuren dargestellt. Es zeigen:

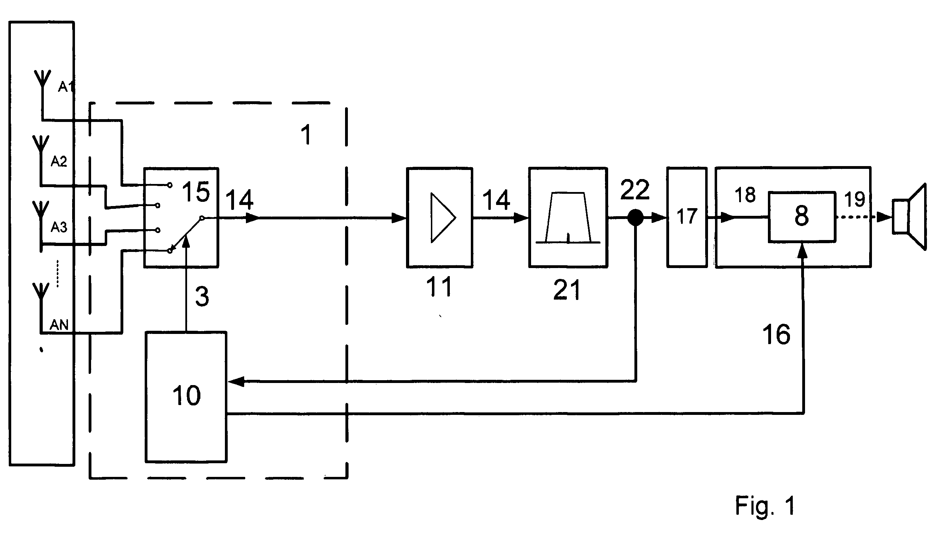

Fig. 1: Empfangsanlage nach dem Stand der Technik mit Mehrantennen A1 ... AN, Diversity-Prozessor 1, Empfangskanalfilter 21, Empfangskanal-Signal 22 zur Feststellung einer Empfangsstörung mit Störungsdetektor 10 und Zuleitung der Schaltsignalimpulse 16 zur Störunterdrückungsschaltung 8 über eine gesonderte, vom Signalweg der Empfangssignale 14 getrennte Leitung.

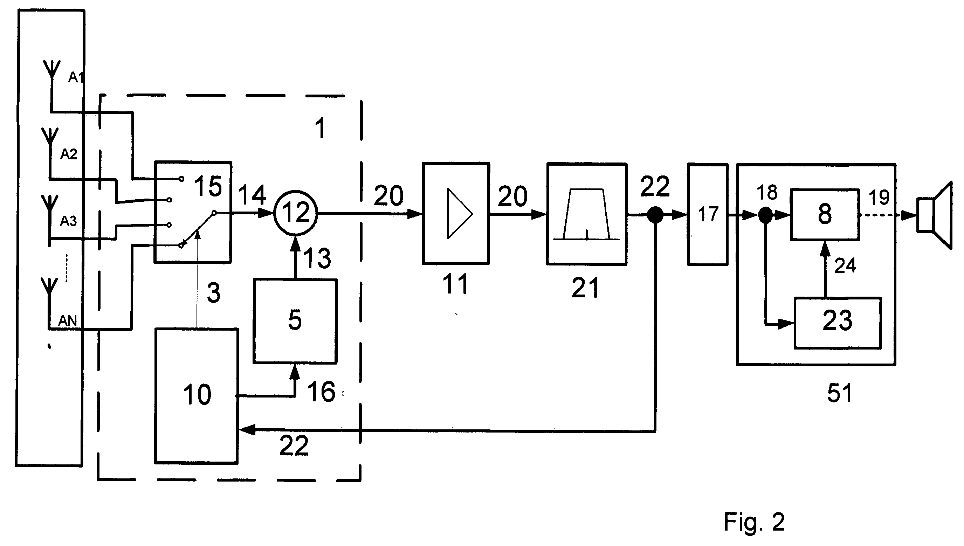

Fig. 2: Empfangsanlage nach der Erfindung mit Einspeisung eines aus dem Schaltsignalimpuls 16 in der Signatursignalbildung 5 abgeleiteten impulsartigen Signatursignals 13 über die Signatursignalweiche 12 in den Signalweg des Empfangssignals 14 zur Markierung der Empfangssignale mit dem Zeitpunkt der praktisch zeitgleich erfolgten Umschaltung des Antennensignals mit Antennen-Umschaltsignal 3. Aus dem Basisband-Signatursignal 18 am Ausgang des Basisbandprozessors 17 wird in der Signatursignal-Auswertung 23 das Störausblendsignal 24 abgeleitet und der Ausblendvorgang in der Störunterdrückungsschaltung 8 unmittelbar ausgelöst.

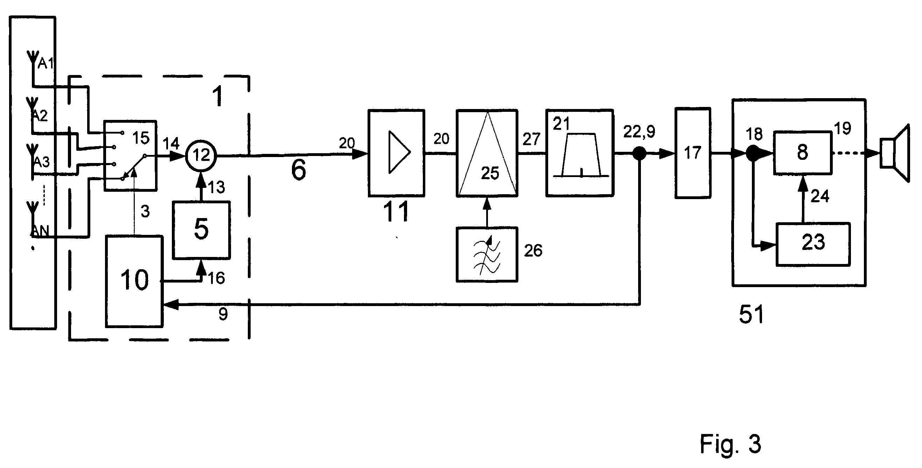

Fig. 3: Empfangsanlage nach der Erfindung wie in Figur 2, jedoch mit Überlagerungsempfänger mit Oszillator 26, Frequenzmischer 25 und ZF-Filter 21 als Empfangskanalfilter. Das Empfangskanal-Signal 22 ist dem Störungsdetektor 10 als ZF-Signal 9 mit gesonderter Leitung zugeführt.

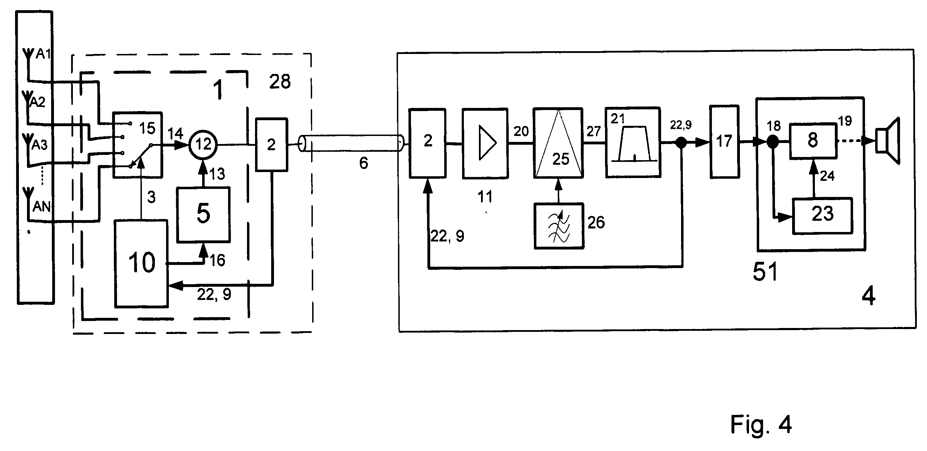

Fig. 4: Empfangsanlage nach der Erfindung wie in Figur 3, jedoch mit Diversityeinheit 28, in welcher über die HF-Leitung 6 das ZF-Signal 9 dem Störungsdetektor 10 zugeführt ist. Dieses Signal ist empfängerseitig über eine Selektionseinrichtung 2 in die HF-Leitung eingekoppelt und in der Diversityeinheit 28 über eine entsprechende Selektionseinrichtung 2 ausgekoppelt.

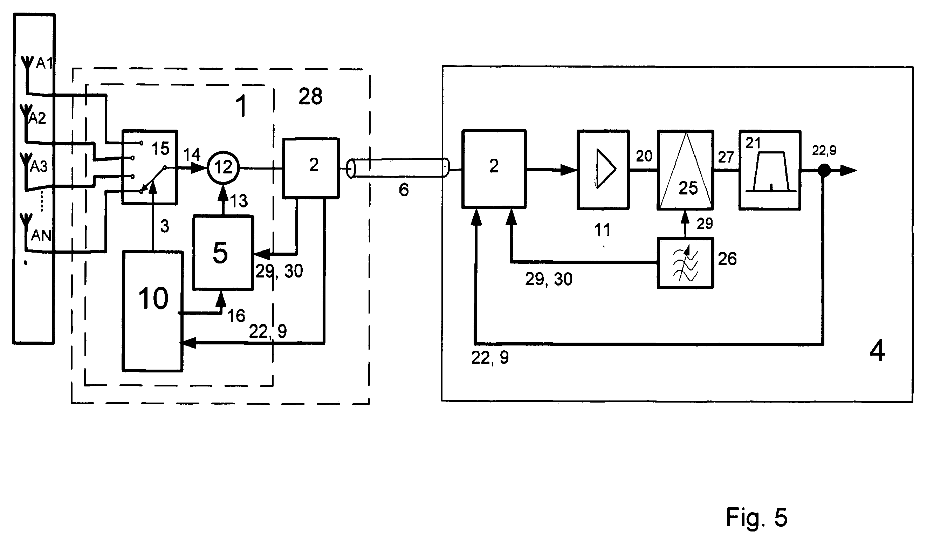

Fig. 5: Empfangsanlage nach der Erfindung wie in Figur 4, jedoch mit zusätzlicher Zuführung der Oszillatorschwingung 29 über die HF-Leitung 6 mit entsprechenden Selektionseinrichtungen 2 und mit der Signatursignalbildung 5 zur Umsetzung der Oszillatorschwingung 29 in eine Schwingung im HF-Empfangskanal als Signatursignal 13 mit hinreichendem Frequenzabstand $f_S$ zum Hochfrequenzträger $f_H$ zur Bildung eines Frequenzstörhubimpulses.

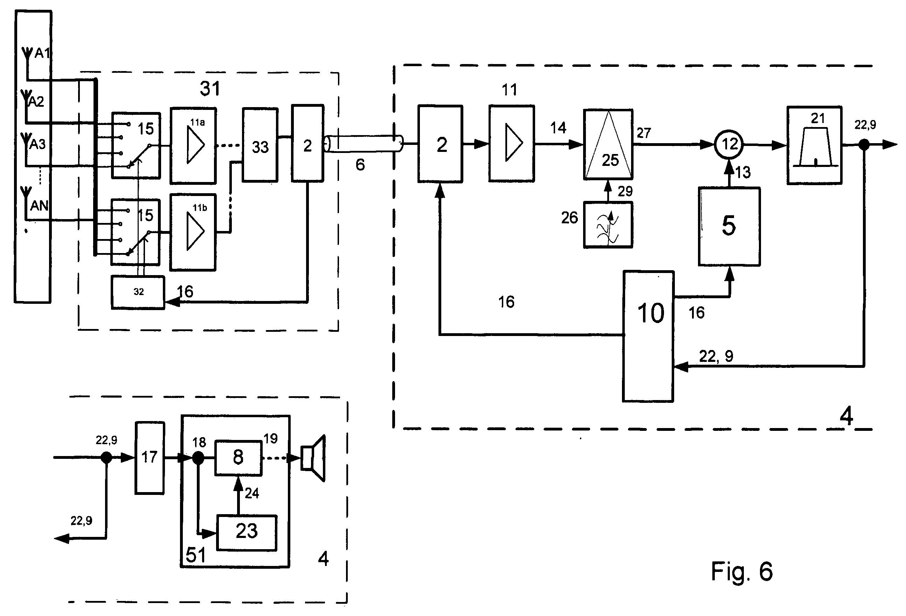

Fig. 6: Empfangsanlage nach der Erfindung mit Störungsdetektor 10, Signatursignalbildung 5 und Signatursignalweiche 12 im Empfänger 4. Die Einspeisung des impulsförmigen Signatursignals 13 in den ZF-Signalweg der Empfangssignale erfolgt über die Signatursignalweiche 12 vor dem ZF-Filter 21. Die Schaltsignalimpulse 16 sind über Selektionseinrichtungen 2 über die HF-Leitung 6 der Schaltlogik 32 in der Antennenschalt-Einheit 31 zur Bildung alternativer Empfangssignale mit Hilfe des Antennensignalumschalters 15 zugeführt.

Fig. 7:

a) Spektrallinie eines Signatursignalträgers 38 als Signatursignal 13 mit der Frequenzablage fs vom Hochfrequenzträger $f_H$
b) Signatursignalbildung 5 mit Signatur-Signalgenerator 35 mit der Eigenfrequenz $f_S$ zur im-pulsartigen additiven Einspeisung des Signatur-signals 13 in die Signatursignalweiche 12 über den von Schaltsignalimpulsen 16 und Impulsformer 34 gesteuerten Schalter 36. Am Ausgang der Signatursignalweiche 12 liegt das markierte Empfangssignal 20 vor.
c) Zeitverlauf der Frequenzabweichung eines mit einem Audiosignal in der Frequenz modu-lierten Hochfrequenzträgers mit Frequenzhu-bimpuls am Ausgang der Signatursignalweiche 12 bei hinreichend großer Amplitude des impulsartig additiv überlagerten Signatursignals 13.

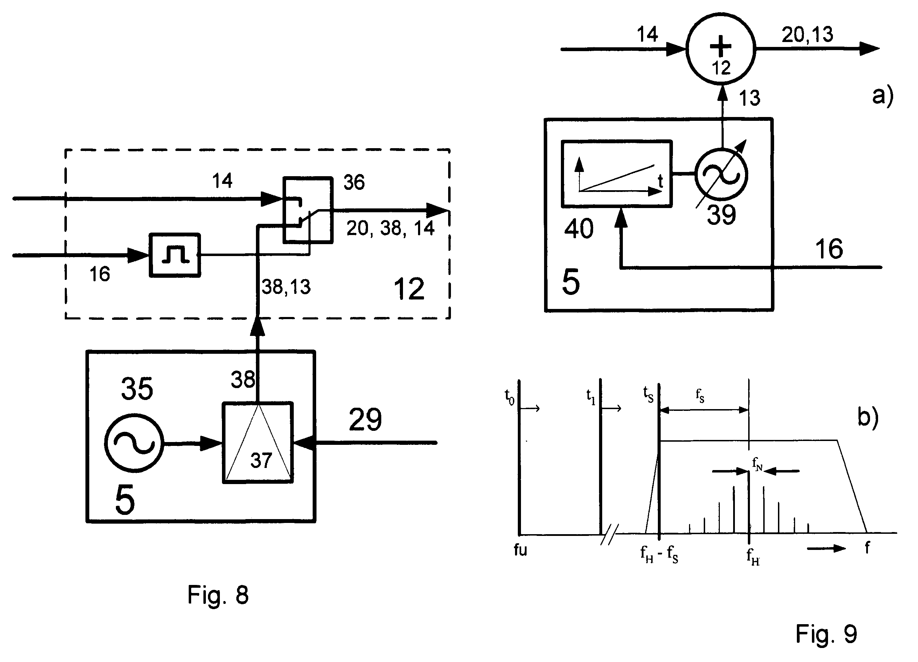

Fig. 8: Die Oszillatorschwingung 29 des Empfängers 4 ist, wie in Figur 5, der Signatursignalbildung 5 mit Mischer 37 und mit Festfrequenz-Signalgenerator 35 zur Erzeugung des Signatursignalträgers 38 zugeführt. Dieser wird über den in der Signatursignalweiche 12 befindlichen und von den Schaltsignalimpulsen 16 gesteuerten Schalter 36 impulsartig in den Signalweg der Empfangssignale 14 eingespeist.

Fig. 9:

a) Signatursignalbildung 5 mit abstimmbarem Oszillator 39, gesteuert von einem Rampenfunktionsgeber 40 zur Erzeugung eines Frequenzanstiegs. Das Signatursignal 13 ist dem Empfangssignal 14 in der Signatursignalweiche 12 additiv überlagert, sodass bei Erreichen der Bandgrenze des Empfangskanals am Ausgang des FM-Demodulators 17 ein Frequenzsprung bewirkt ist.
b) Darstellung der Spektrallinie des Signatursignals 13 zu verschiedenen Zeitpunkten $t_0$, $t_1$, $t_S$ während des Durchlaufs der Rampenfunktion, wodurch bei Erreichen der Bandgrenze des Empfangskanals bei der Frequenz $f_H$ - $f_S$ am Ausgang des FM-Demodulators 17 im Empfänger 4 ein Frequenzsprung bewirkt ist.

Fig. 10: Störausblendungs-Einheit 51 mit Differenzierschaltung 42 und Impulsformer 34 in der Signatursignal-Auswertung 23 zur Feststellung des Basisband-Signatursignals 18 nach dem FM-Demodulator 17 und Bildung des Störausblendsignals 24 zur Ansteuerung der Störunterdrückungsschaltung 8

Fig. 11: Störausblendungs-Einheit 51 wie in Fig. 10, jedoch für ein durch eine Impulskette gestaltetes Basisband-Signatursignal 18 mit einem auf die Pulsfolgefrequenz abgestimmten Festfrequenzresonator 7 zur treffsicheren Ableitung eines Störausblendsignals 24

Fig. 12: Signatursignalbildung 5 mit Frequenzumsetzer 50 und Festfrequenzoszillator 43 mit der Eigenfrequenz $f_S$ zur Bildung des Signatursignals 13 durch Versetzung des Empfangssignals 14 um die Frequenzablage fs mit Hilfe von zwei um 90 Grad in der Phase unterschiedlich angesteuerten symmetrischen Mischern 44. Die Einspeisung dieses Signals über den Schalter 36 in den Signalweg der Empfangssignale 14 erfolgt impulsartig durch einen vom Schaltsignalimpuls 16 gesteuerten Schalter 36.

Fig. 13:

a) Spektrum der um die Festfrequenz $f_S$ versetzten Empfangssignale 14 in Relation zur Frequenzlage des in den Hochfrequenzbereich ab-gebildeten Empfangskanalfilters 21. Dem Emp-fangskanal zugeordnete Spektrallinien ($f_H$ - $f_S$,..) sind durch durchgezogene Linien und die Nachbarkanalsignale ($f_{NKu}$ - $f_S$,.., $f_{NKo}$ - $f_S$,..) durch gestrichelte Linien gekennzeichnet.
b) Frequenzabweichung des Hochfrequenzträgers im Empfangssignal 14 bei Frequenzmodulation mit einem $f_N$ = 1kHz Tonsignal und im-pulsartiger Abweichung von der Augenblicksfre-quenz des Empfangssignals 14 im Empfangskanal im Moment des Auftretens des Signatursignals 13 über die Impulsdauer t$_1$.

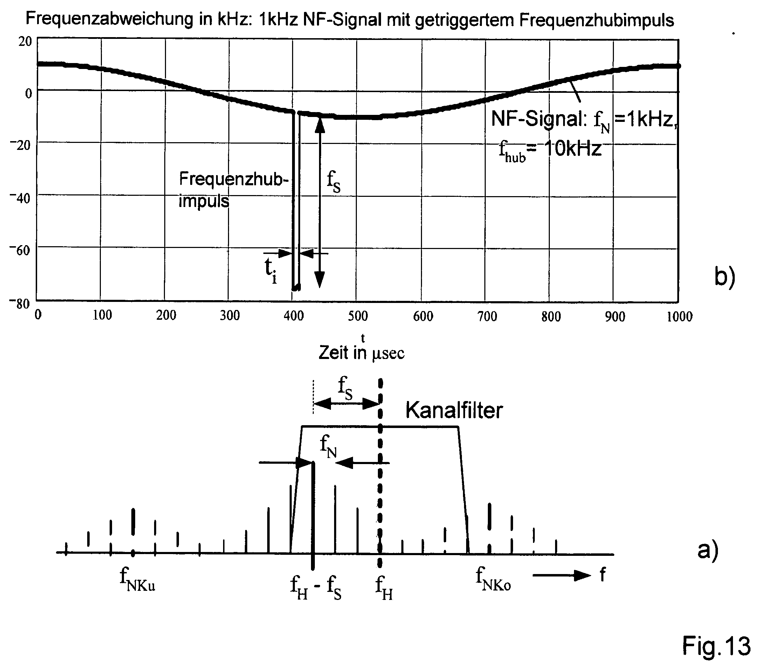

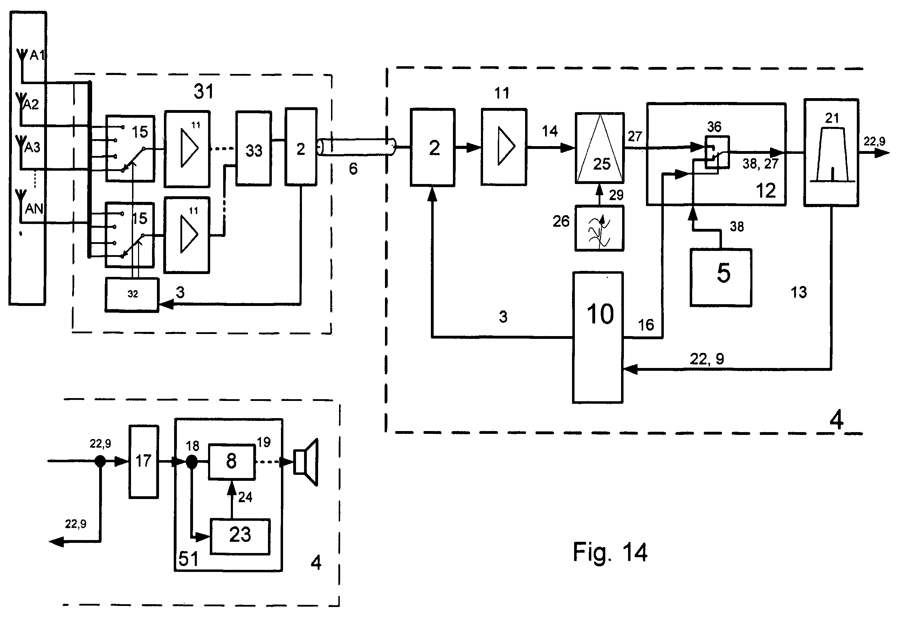

Fig. 14: Empfangsanlage wie in Fig. 6, jedoch an Stelle der additiven Überlagerung des Signatursignals 13 in der Signatursignalweiche 12 erfolgt die Einspeisung des Signatursignals 13 in den Signalweg der Empfangssignale 14, wie in Fig. 13, über einen vom Schaltsignalimpuls 16 gesteuerten Schalter 36.

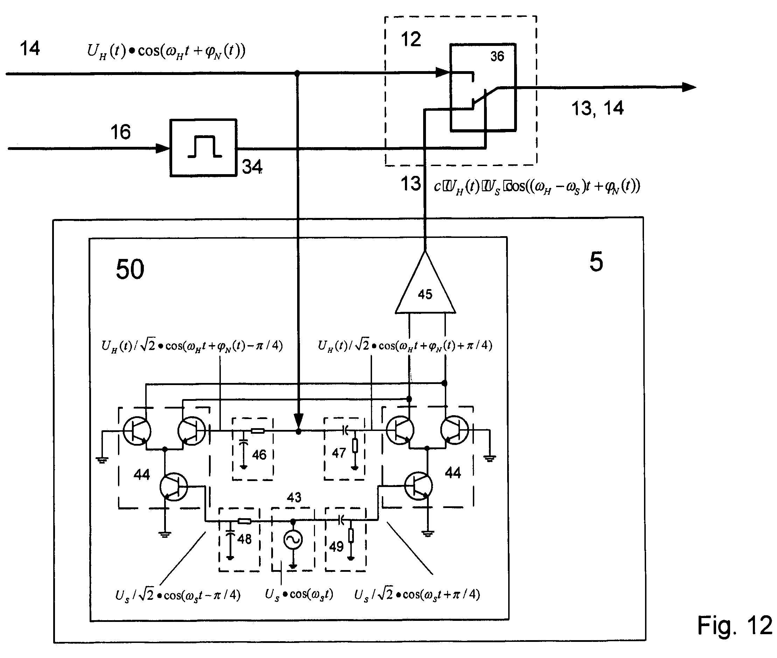

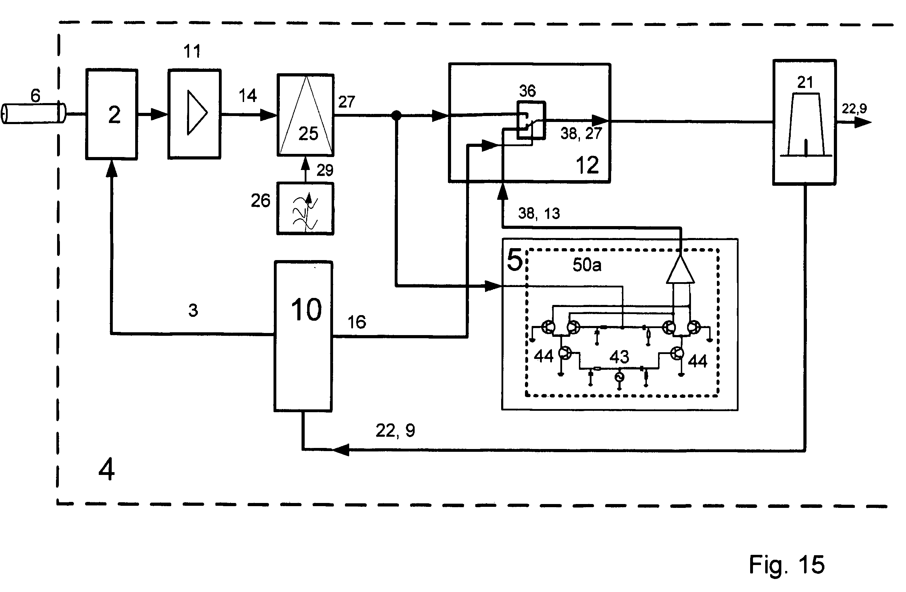

Fig. 15: Empfangsanlage wie in den Figuren 6 und 14, wobei das Signatursignal 13, ähnlich wie in Fig. 12, jedoch durch einen ZF-Frequenzumsetzer 25 mit Festfrequenzoszillator 43 mit der Eigenfrequenz f$_S$ durch Versetzung des Empfangssignals 27 in der Zwischenfrequenzebene um die Frequenzablage fs zur Bildung eines Frequenzhubpulses gebildet ist.

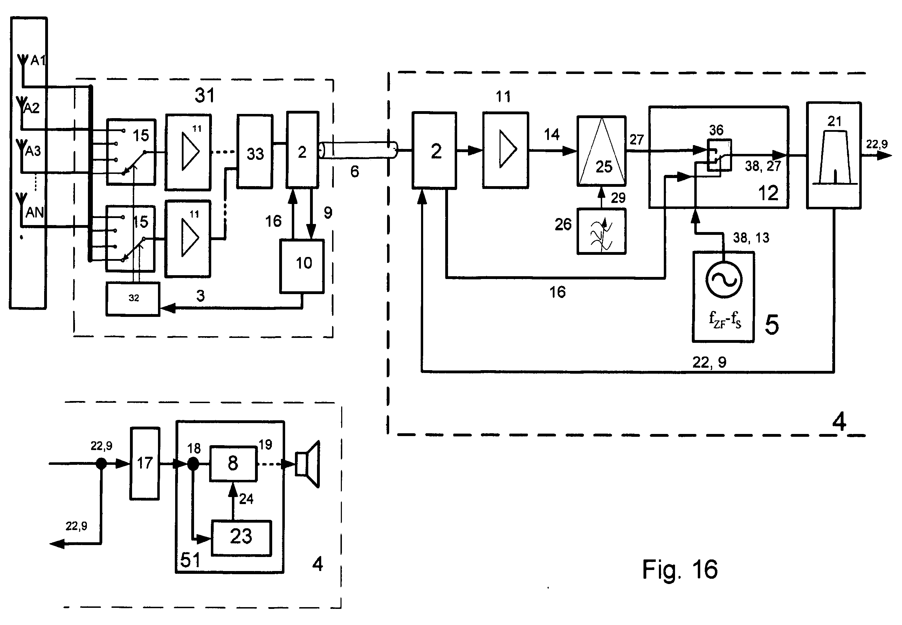

Fig. 16: Empfangsanlage ähnlich wie Fig. 14, jedoch mit dem Störungsdetektor 10 in der Antennenschalt-Einheit 31, dessen Schaltsignalimpulse 16 über die Selektionseinrichtungen 2 und die HF-Leitung 6 dem gesteuerten Schalter 36 in der Signatursignalweiche 12 zugeführt sind und das Signatursignal 13 als Schwingung eines Festfrequenzoszillator 43 mit einer von der ZF-Mittenfrequenz f$_{ZF}$ um die Frequenz fs abweichende Frequenz gebildet ist.

Die mit der Erfindung erzielbaren Vorteile bestehen in der Möglichkeit, die mit dem Einschwingvorgang des Kanalbandfilters bei Umschaltung auf ein anderes Antennensignal sowie der gegebenenfalls vorliegenden Begrenzung auf den Audiofrequenzbereich verbundenen Störungen zeitgenau auszublenden. Insbesondere beim UKW-Empfang - bei dem das Kanalbandfilter 21 in der Regel durch das ZF-Filter 21 eines Überlagerungsempfängers 4 gebildet ist - und ganz besonders bei Klassikmusik können beim Umschalten auf ein anderes Antennensignal Reststörungen hörbar werden, welche im Audiosignal nicht vom Signalinhalt getrennt festgestellt und ausgeblendet werden können. Die Breite des bei der Umschaltung entstehenden Frequenzstörhubimpulses entspricht bei einer Frequenzbandbreite des Kanalbandfilters 21 von z.B.150kHz etwa 7$\mu$s. Verzögerungen, die ein derartiger Impuls bei Durchlaufen dieses Filters erfährt, betragen etwa 20$\mu$s. Eine weitere Bandbegrenzung des Signals nach der Demodulation auf 15kHz bewirkt eine weitere Retardierung, deren Größenordnung etwa 100$\mu$s beträgt. Dabei wird der Störpuls auf circa 30 - 70$\mu$s zeitlich gespreizt. Somit hat sich eine Zeitdauer t$_A$ der Störausblendung nach dieser Bandbegrenzung von bis zu 70$\mu$s als günstig erwiesen, nach welcher der Einschwingvorgang nach der Frequenzbandbegrenzung beim Umschalten auf ein anderes Antennensignal abgeklungen ist. Die mit einem derartigen Impuls verbundene Störenergie ist jedoch so klein, dass der Beginn dieses Impulses im Empfänger nicht sicher festgestellt und zur Auslösung der Störunterdrückung nicht herangezogen werden kann. Der Impuls ist somit nicht klein genug, so dass Umschaltstörungen unhörbar wären, jedoch andererseits mit seiner Anstiegsflanke nicht groß genug, um die Auslösung der Störunterdrückung zu bewirken. Die erfindungsgemäße Idee besteht somit darin, den Zeitpunkt des Umschaltens im Empfangssignal 14 vor dem Kanalbandfilter mit einem impulsartigen Signatursignal 13 deutlich zu markieren, welches im Empfänger 4 ausgewertet wird, um in der Störunterdrückungsschaltung 8 die Ausblendung der mit dem Umschaltvorgang verbundenen Störungen zu initiieren. Damit ist der zeitliche Einsatz der Störung durch das Einschwingen nach dem Umschalten des Antennensignals in der Störunterdrückungsschaltung 8 und das Auftreten des Signatursignals 13 bis hin zur Audio-Frequenzebene aufgrund der Gleichheit der Laufzeiten in der Frequenzbandfilterung gegeben. Dabei ist es besonders vorteilhaft, wenn das impulsartige Signatursignal 13 unmittelbar vor der Umschaltung erfolgt und die Anstiegszeit des impulsartigen Signatursignals 13 sehr klein ist im Vergleich zur Ausblendzeit und der Impuls groß genug gewählt ist, damit die Auslösung der Störunterdrückung im Empfänger sicher erfolgt. Durch unmittelbare Auslösung der Störunterdrückung wird damit sowohl die durch das impulsartige Signatursignal 13 als auch die durch den Umschaltvorgang selbst hervorgerufene Störung unhörbar.

In einer vorteilhaften Ausführungsform der Erfindung ist, wie in Fig. 2 dargestellt, im Diversity-Prozessor 1 eine Einrichtung zur Signatursignalbildung 5 vorhanden, in welcher das Signatursignal 13 gebildet wird. Die Signatursignalbildung 5 wird bei Vorliegen ungünstiger Empfangsbedingungen durch einen vom Störungsdetektor 10 abgegebenen Schaltsignalimpuls 16 angesteuert und das Signatursignal 13 über die Signatursignalweiche 12 in den Signalweg der Empfangssignale 14 eingespeist. Dabei ist es besonders vorteilhaft, wenn das in Verbindung mit dem Schaltsignalimpuls 16 ausgelöste Antennen-Umschaltsignal 3 gegenüber dem Signatursignal 13 geringfügig retardiert ist. In der dem Diversity Prozessor 1 nachgeschalteten Empfangseinrichtung wird nach dem HF-Verstärker 11 und dem Empfangskanalfilter 21 das Empfangskanal-Signal 22 dem Störungsdetektor 10 zur Anzeige von Empfangsstörungen zugeführt. Nach dem Basisbandprozessor 17 wird in der darauf folgenden Störausblendungs-Einheit 51 das Signatursignal in der Signatursignal-Auswertung 23 ausgewertet und mit Hilfe des dort abgeleiteten Störausblendsignals 24 die Störunterdrückung in der Störunterdrückungsschaltung 8 ausgelöst.

In einer besonders vorteilhaften Ausführungsform der Erfindung ist in Fig. 3 die über die HF-Leitung 6 dem Diversity-Prozessor 1 nachgeschaltete Empfangseinrichtung nach dem Überlagerungsprinzip mit HF-Verstärker 11, Frequenzumsetzer 25 und Oszillator 26 gestaltet. Für den Empfang frequenzmodulierter Signale ist der Basisbandprozessor 17 als FM-Demodulator 17 ausgeführt. Das Empfangskanalfilter 21 ist demnach als ZF-Filter 21 ausgeführt und dem Störungsdetektor 10 ist das ZF-Signal 9 zur Prüfung auf Störung im Empfangssignal 14 zugeführt. Dem ZF-Filter 21 ist der FM-Demodulator 17 und diesem wiederum die Störausblendungs-Einheit 51 nachgeschaltet, welcher eingangsseitig das Audio-Signal 18 mit Signatur zur Auslösung der Störausblendung in der Störunterdrückungsschaltung 8 zugeleitet ist. In einer besonders vorteilhaften Weiterbildung der Anordnung in Figur 3 ist in Figur 4 der Diversity-Prozessor 1 in einer Diversityeinheit 28 in der Nähe der Mehrantennen A1 ... AN im Fahrzeug angebracht und über die HF-Leitung 6 mit dem Empfänger 4 verbunden. Auf an sich bekannte Weise wird das Empfangskanal-Signal 22 in Form des ZF-Signals 9 über eine Selektionseinrichtung 2 in die HF-Leitung 6 eingespeist und in der Diversityeinheit 28 über eine weitere Selektionseinrichtung 2 ausgekoppelt und dem Störungsdetektor 10 zugeführt.

In vorteilhaften Weiterbildungen der Erfindung werden im Folgenden verschiedene Ausführungsformen zur Bildung des impulsartigen Signatursignals 13 angegeben.

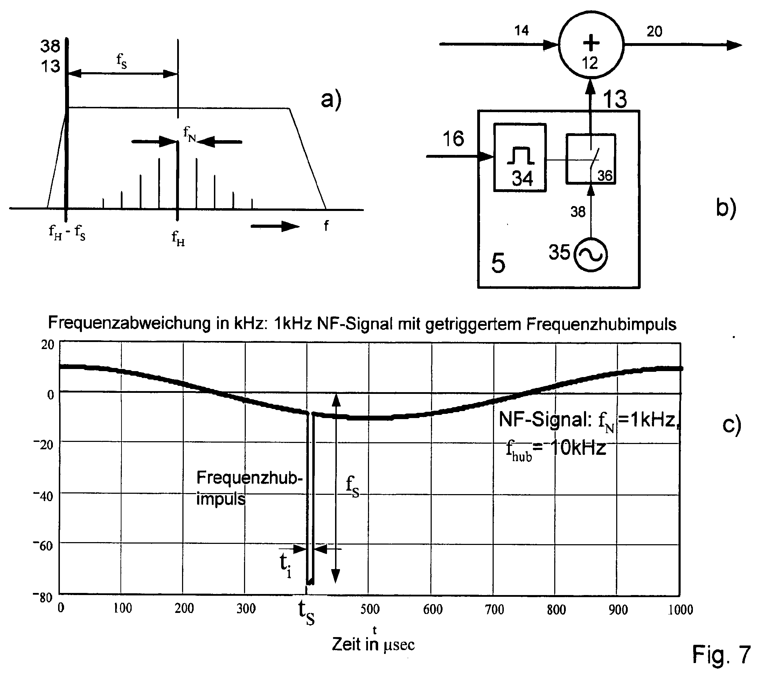

Eine besonders wirkungsvolle Methode nach der Erfindung zur Auslösung der Störausblendung in der Störausblendungs-Einheit 51 besteht in der Gestaltung des Signatursignals 13 als Signatursignalträger 38 in Form einer sinusförmigen Schwingung mit einem hinreichend großen Frequenzabstand $f_S$ zur aktuellen Frequenz der HF-Trägerschwingung $f_H$ des Empfangskanals. Dieses Signal kann, wie in Fig. 7b, für das Beispiel einer fest eingestellten Empfangsfrequenz durch einen in der Signatursignalbildung 5 befindlichen Festfrequenz-Signalgenerator 35 mit der Frequenz $f_H$ - $f_S$ realisiert sein. Zur Markierung des Zeitpunktes vor einer Umschaltung des Antennensignals wird der Signatursignalträger 38 dem Empfangssignal 14 in der Signatursignalweiche 12 über einen durch die Schaltsignalimpulse 16 gesteuerten Schalter 36 impulsartig und in der Größe dominant aufgeprägt und bildet somit den Signatursignalträger 38. Bei Auftreten dieses Signals entsteht im Empfangskanal ein dem Frequenzabstand $f_S$ entsprechend großer Frequenzstörhubimpuls, welcher am Ausgang des FM-Demodulators 17 im Empfänger 4 einen Impuls zur Auslösung der Störausblendung bewirkt. Je größer der Frequenzabstand $f_S$ zur aktuellen Frequenz der HF-Trägerschwingung $f_H$ des Empfangskanals gewählt ist, umso größer ist der Frequenzstörhubimpuls und der am Ausgang des FM-Demodulators 17 wirksame Impuls zur Auslösung der Störausblendung. In Figur 7a ist das Spektrum des Empfangssignals innerhalb des Empfangskanals mit einem beispielhaft in der Nähe des unteren Endes des Kanals platzierten Signatursignalträgers 38 dargestellt. In Figur 7c ist - zur Erläuterung - der Zeitverlauf der Frequenzabweichung von der Trägerfrequenz $f_H$ eines mit einem Niederfrequenzsignal von $f_N$ = 1kHz modulierten Hochfrequenzträgers mit einem Frequenzstörhubimpuls zur Markierung des Umschaltmoments zum Zeitpunkt $t_S$ entsprechend dem Frequenzabstand $f_S$ dargestellt. Die Impulsdauer $t_i$ kann gemäß der Größe des Frequenzabstands $f_S$ zur sicheren Auslösung der Störausblendung entsprechend klein gewählt werden. Besonders wirkungsvoll ist demnach ein Frequenzabstand $f_S$ in der Nähe der halben Kanalbandbreite. Im Falle des UKW-Rundfunks ist somit ein Frequenzabstand $f_S$ in der Größenordnung von 40 bis 100 kHz günstig. Es ist offensichtlich, dass die erfindungsgemäße Auslösung der Störausblendung auf analoge Weise auch mit einem hoch liegenden Festfrequenz-Signalgenerator 35 mit der Frequenz $f_H$ + $f_S$ erreicht werden kann.

Um dem im Allgemeinen vorliegenden Fall eines in der Frequenz abstimmbaren Empfängers 4 Rechnung zu tragen, wird in einer vorteilhaften Weiterbildung der Erfindung, wie in Figur 5 dargestellt, zur Erzeugung eines entsprechenden Signatursignals 13 in Form eines Signatursignalträgers 38 die der eingestellten Empfangsfrequenz entsprechende Oszillatorschwingung 29 der Oszillatorfrequenz $f_O$ des Oszillators 26 im Empfänger 4 zur Diversityeinheit 28 übertragen. Dies erfolgt über Selektionseinrichtungen 2 und die HF-Leitung 6 zur Signatursignalbildung 5 in der Diversityeinheit 28. In der Signatursignalbildung 5 in Fig. 8 sind ein Signalgenerator 35 und ein Frequenzmischer 37 vorhanden, dem die Oszillatorschwingung 29 und das Ausgangssignal des Signalgenerators 35 zugeführt sind. Die Frequenz des Signalgenerators 35 ist, basierend auf der Kenntnis der Zwischenfrequenz und der gewünschten Frequenzablage $f_S$ vom HF-Träger des aktuellen Empfangssignals, fest eingestellt.

Dabei gilt zur Erzeugung eines in der Frequenz unterhalb des Hochfrequenzträgers $f_H$ des Empfangskanals liegenden Signatursignalträgers 38 mit der Frequenz $f_H$ - fs folgende Bedingung für die Frequenz $f_{Gen}$ des Signalgenerators 35:

$$f_{Gen} = f_{ZF} + f_S \qquad (1)$$

Entsprechend gilt zur Erzeugung eines in der Frequenz oberhalb des Hochfrequenzträgers $f_H$ des Empfangskanals liegenden Signatursignalträgers 38 mit der Frequenz $f_H$ + $f_S$ :

$$f_{Gen} = f_{ZF} - f_S \qquad (2)$$

Beide Beziehungen gelten für Empfänger 4 mit in der Frequenz hoch liegender Oszillatorfrequenz $f_O$. Bei in der Frequenz niedrig liegendem Oszillator 26 sind die Summen-und Differenzzeichen in den Beziehungen (1) und (2) entsprechend vertauscht.

In einer alternativen Variante der Erfindung wird an Stelle der Oszillatorschwingung 29 eine vorzugsweise digital gestaltete Oszillatorfrequenzinformation 30 übertragen, welches in der Regel aus der digitalen Frequenzinformation des empfangerseitigen Oszillators 26 abgeleitet werden kann und in der Signatursignalbildung 5 zur Einstellung der Schwingfrequenz eines dort befindlichen Oszillators dient.

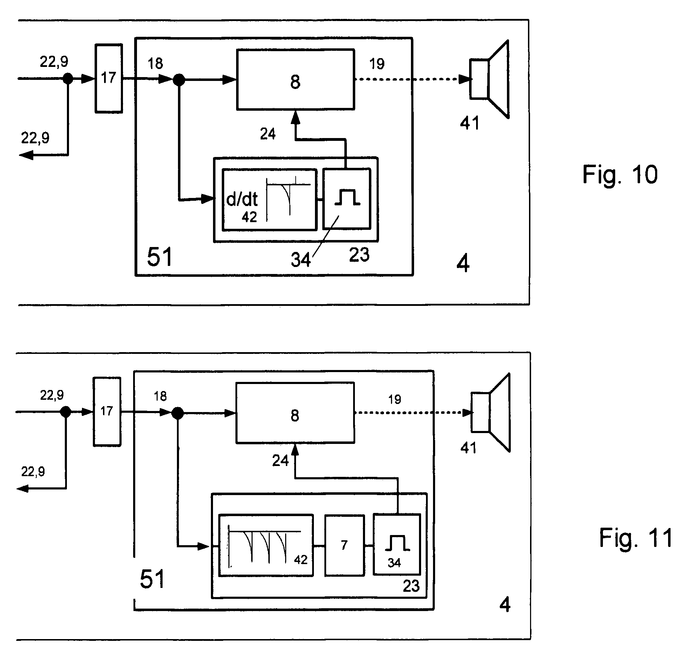

In einer weiteren vorteilhaften Ausgestaltung der Erfindung ist, wie in Fig. 9a ersichtlich, in der Signatursignalbildung 5 ein abstimmbarer Oszillator 39 vorhanden, welcher von einem Rampenfunktionsgeber 40 abgestimmt wird. Der Rampenfunktionsgeber 40 ist in der Weise gestaltet, dass er die Schwingfrequenz des abstimmbaren Oszillators 39 in wenigen Mikrosekunden, ausgehend von z.B. der untersten Frequenz des Rundfunk-Frequenzbandes $f_u$, also z.B. des UKW-Frequenzbandes zu ansteigender Frequenz hin verändert. Dieser Vorgang wird jeweils durch einen Schaltsignalimpuls 16 ausgelöst. Das Ausgangssignal des abstimmbaren Oszillators 39 bildet das Signatursignal 13, welches dem Empfangssignal 14 in der Signatursignalweiche 12 mit kräftiger Amplitude additiv überlagert wird. Damit entsteht bei Erreichen der Bandgrenze des Empfangskanals am Ausgang des ZF-Filters 21 ein kräftiger negativer Frequenzsprung von der Größenordnung der halben Kanalbandbreite im Empfangssignal des Empfängers 4 und am Ausgang des FM-Demodulators 17 ein ausgeprägter Impuls. Mit Hilfe der in der Störausblendungs-Einheit 51 befindlichen und in Fig. 10 dargestellten Differenzierschaltung 42 wird daraus ein Impuls abgeleitet, welcher als Störausblendsignal 24 die Störausblendung in der Störunterdrückungsschaltung 8 initiiert. Um die Ansprechsicherheit zu verbessern, kann es vorteilhaft sein, der Differenzierschaltung 42 in der Signatursignal-Auswertung 23 einen Impulsformer 34 zur Ansteuerung der Störunterdrückungsschaltung 8 nach zu schalten. Zur Erläuterung der Wirkungsweise ist in Figur 9b der Empfangskanal mit seinen Bandgrenzen für verschiedene Zeitpunkte $t_0$, $t_1$, $t_s$ spektral dargestellt und die Spektrallinie der Oszillatorschwingung - beginnend mit dem Zeitpunkt $t_0$ bei der untersten Frequenz des Rundfunk-Frequenzbandes $f_u$ - zu ansteigender Frequenz hin verändert dargestellt. Bei Erreichen des Durchlassbereiches des ZF-Filters 21 etwa zum Zeitpunkt $t_s$ wird deren Frequenzsprung ausgelöst, welcher die beschriebene Störausblendung initiiert. Es ist offensichtlich, dass die Schwingfrequenz des abstimmbaren Oszillators 39 bei entsprechender Gestaltung des Rampenfunktionsgebers 40 in analoger Weise, ausgehend von der obersten Frequenz des Rundfunk-Frequenzbandes $f_o$, zu abfallender Frequenz hin verändert werden kann, um bei Erreichen der oberen Bandgrenze des Empfangskanals einen kräftigen positiven Frequenzsprung von der Größenordnung der halben Kanalbandbreite im ZF-Empfangssignal 9 zu erzeugen.

Zur weiteren Erhöhung der Ansprechsicherheit der Störausblendung kann in einer vorteilhaften Weiterbildung der Erfindung eine Impulsreihe mit vorgegebener Pulsfrequenz erzeugt werden und - wie in der Störausblendungs-Einheit 51 in Fig. 11 dargestellt - eine frequenzselektive Pulsauswertung 7 und ein Pulsformer 34 zur Gestaltung des Störausblendsignals 24 gestaltet werden. Die Pulsreihe wird dabei durch eine geeignete Vorrichtung in der Signatursignalbildung 5 erzeugt und jeweils durch einen Schaltsignalimpuls 16 ausgelöst. Dieses Verfahren kann analog hierzu durch mehrfache Auslösung des oben genannten Rampenfunktionsgebers 40 zur Erzeugung einer Pulsreihe des daraus resultierenden und oben beschriebenen Frequenzsprungs angewandt werden.

In einer besonders vorteilhaften Ausgestaltung der Erfindung wird zur Erzeugung eines Frequenzstörhubimpulses die Frequenz des ankommenden, in der Frequenz modulierten Empfangssignals 14 um die Frequenzabweichung fs sprunghaft über die Zeit der Impulsbreite $t_i$ verschoben. Im Gegensatz zu der in den Figuren 7 a,b,c dargestellten und in diesem Zusammenhang erläuterten Methode wird hier das Signatursignal 13 durch Frequenzverschiebung direkt aus dem Empfangssignal 14 gewonnen. Die Frequenzverschiebung während des Frequenzhubimpulses um die Frequenz $f_S$ ist in Relation zur Frequenzlage des Kanalfilters in Figur 13a dargestellt. In Figur 13b ist - zur Erläuterung - der Zeitverlauf der Frequenzabweichung von der Trägerfrequenz $f_H$ eines mit einem Niederfrequenzsignal von $f_N$ = 1 kHz modulierten Hochfrequenzträgers mit einem Frequenzstörhubimpuls zur Markierung des Umschaltmoments zum Zeitpunkt $t_S$ entsprechend dem Frequenzabstand $f_S$ dargestellt.

Auch hier kann die Impulsdauer $t_i$ gemäß der Größe des Frequenzabstands $f_S$ zur sicheren Auslösung der Störausblendung entsprechend klein gewählt werden. Besonders wirkungsvoll ist demnach auch hier ein Frequenzabstand $f_S$ in der Nähe der halben Kanalbandbreite und im Falle des UKW-Rundfunks ist demnach auch hier ein Frequenzabstand $f_S$ in der Größenordnung von 40 bis 70 kHz günstig. Es ist offensichtlich, dass die erfindungsgemäße Auslösung der Störausblendung auf analoge Weise mit einem positiven Frequenzstörhubimpuls zur Markierung des Umschaltmoments zum Zeitpunkt $t_S$ entsprechend dem Frequenzabstand $f_S$ erfolgen kann.

Erfindungsgemäß kann die impulsförmige Frequenzverschiebung des Empfangssignals 14 zum Beispiel mit Hilfe des Frequenzumsetzers 50 in der Signatursignalbildung 5 in Figur 12 erfolgen. Dies wird an Hand der folgenden Abhandlung ersichtlich: Ist $\varphi_N(t)$ die momentane Phasenabweichung des Hochfrequenzträgers aufgrund der niederfrequenten Modulation und $U_H(t)$ die aktuelle Amplitude der Hochfrequenzschwingung aufgrund der Ausbreitungsbedingungen, so kann das hochfrequente Empfangssignal 14 mit der Trägerfrequenz $f_H$ wie folgt beschrieben werden:

$$U_H(t) \bullet \cos(\omega_H t + \varphi_N(t)) \qquad (3)$$

Die momentane Frequenzabweichung von der Trägerfrequenz $f_H$ ist in Formel (3) aufgrund der nieder-

frequenten Modulation durch $\dfrac{1}{2\pi} * \dfrac{d\varphi_N(t)}{dt}$ gegeben, so dass die Momentanfrequenz lautet:

$$f_H + \frac{1}{2\pi} * \frac{d\varphi_N(t)}{dt} \qquad (4)$$

Dieses Signal wird in Figur 12 sowohl einem -45°-HF-Phasendrehglied 46 als auch einem +45°-HF-Phasendrehglied 47 zugeführt, dessen Ausgangssignal jeweils einen ersten Eingang eines symmetrischen Mischers 44 ansteuert. Für dieses Beispiel lautet das um den Phasenwinkel π/4 nacheilende Signal am ersten Eingang des einen symmetrischen Mischers 44

$$U_H(t)/\sqrt{2} \bullet \cos(\omega_H t + \varphi_N(t) - \pi/4) \quad (5)$$

und das um den Phasenwinkel π/4 voreilende Signal am ersten Eingang des anderen symmetrischen Mischers 44

$$U_H(t)/\sqrt{2} \bullet \cos(\omega_H t + \varphi_N(t) + \pi/4) \qquad (6)$$

damit werden die beiden symmetrischen Mischer 44 mit um π/2 in der Phase verschobenen Signalen angesteuert. Die π/4- Phasendrehglieder können z.B. auf einfache Weise als RC-Glied für das -45°-HF-Phasendrehglied 46 bzw. als ein CR-Glied für das +45°-HF-Phasendrehglied 47 gestaltet werden, welche für die Mittenfrequenz z.B. des UKW-Rundfunkbands dimensioniert sind. Um die Frequenzverschiebung zu bewirken, ist im Frequenzumsetzer 50 ein Festfrequenzoszillator 43 vorhanden, dessen Schwingfrequenz gleich der Frequenz $f_S$ ist, um die das Empfangssignal 14 versetzt werden soll. Auf analoge Weise wird das Ausgangssignal des Festfrequenzoszillators 43 den beiden zweiten Eingängen der symmetrischen Mischer 44 um π/2 in der Phase zueinander verschoben zugeführt. Dies erfolgt in einfacher Weise wieder mit Hilfe von π/4- Phasendrehglieder, welche für diese Frequenz gestaltet werden können, wobei das eine als RC-Glied für das -45°-NF-Phasendrehglied 48 und das andere als ein CR-Glied für das +45°-NF-Phasendrehglied 49 dargestellt werden kann. Damit lautet das um den Phasenwinkel π/4 nacheilende Signal am zweiten Eingang des einen symmetrischen Mischers 44

$$U_S/\sqrt{2} \bullet \cos(\omega_S t - \pi/4) \qquad (7)$$

und das um den Phasenwinkel π/4 voreilende Signal am zweiten Eingang des anderen symmetrischen Mischers 44

$$U_S/\sqrt{2} \bullet \cos(\omega_S t + \pi/4) \qquad (8)$$

Die entsprechend zusammengeführten Ausgangssignale der beiden symmetrischen Mischer 44 werden in Figur 12 einem Verstärker 45 zugeführt, mit dessen Verstärkungsgrad die Konstante c in seinem Ausgangssignal eingestellt werden kann, so dass dieses wie folgt lautet:

$$c\Box U_H(t)\Box U_S \Box \cos((\omega_H - \omega_S)t + \varphi_N(t)) \quad (9)$$

Dieses Signal bildet das Signatursignal 13, welches mit Hilfe des vom Schaltsignalimpuls 16 gesteuerten Schalters 36 impulsartig in den Signalweg der Empfangssignale 14 eingespeist wird. Aus Beziehung 9 geht hervor, dass die Momentanfrequenz des Signatursignals 13 von der im Moment des Impulses auftretenden Augenblicksfrequenz des Empfangssignals 14 um die Eigenfrequenz $f_S$ des Festfrequenzoszillators 43 impulsartig abweicht, so dass diese lautet:

$$f_H - f_S + \frac{1}{2\pi} * \frac{d\varphi_N(t)}{dt} \qquad (10)$$

Durch Vertauschen der beiden Phasendrehglieder zur Ansteuerung des ersten oder des zweiten Eingangs des symmetrischen Mischers 44 kann eine Frequenzverschiebung in positiver Richtung realisiert werden, so dass sich an Stelle von Formel (10) folgende Augenblicksfrequenz ergibt:

$$f_H + f_S + \frac{1}{2\pi} * \frac{d\varphi_N(t)}{dt} \qquad (11)$$

Mit diesem Verfahren zur Erzeugung eines Signatursignals 13 ist der besondere Vorteil verbunden, dass die Amplitude dieses Signals zeitlich unabhängig der Amplitude des Empfangssignals 14 direkt proportional ist. Bei geeigneter Einstellung der Verstärkung des Verstärkers 45 in Verbindung mit der Amplitude des Signals des Festfrequenzoszillators 43 lässt sich mit $c \bullet U_S$ = 1 bewirken, dass mit Auftreten des Signatursignals 13 kein Amplitudensprung verbunden ist. Damit wird eine besonders hohe Sicherheit des Ansprechens der Störausblendungs-Einheit 51 auf das Signatursignal 13 unabhängig vom Pegel des Empfangssignals 14 erreicht.

In einer weiteren Ausgestaltung der Erfindung sind in Figur 6 der Störungsdetektor 10, die Signatursignalbildung 5 und die Signatursignalweiche 12 im Empfänger 4 untergebracht, wobei Letztere in der Zwischenfrequenzebene 27 vor dem ZF-Filter 21 eingebracht ist.

Hierbei wird vorausgesetzt, dass - wie üblich - die Signallaufzeit in den Hochfrequenz-Übertragungsgliedern und im ZF-Frequenzumsetzer 25 zwischen dem Antennensignalumschalter 15 und der Signatursignalweiche 12 im Sinne der hier zu betrachtenden Laufzeiten vernachlässigbar sind. In der Signatursignalbildung 5 ist zur Erzeugung eines Signatursignals 13 in Form eines Signatursignalträgers 38 mit fester Frequenz ein Signalgenerator 35 vorhanden. Die Frequenz des Signalgenerators 35 weicht um die gewünschte Frequenzablage $f_S$ vom Zwischenfrequenzträger $f_Z$ ab. Diese Schwingung wird, initiiert durch Schaltsignalimpulse 16, über den Schalter 36 in der Signatursignalweiche 12 dem Empfangssignal in der Zwischenfrequenzebene 27 impulsförmig dominant additiv überlagert.

An Stelle der additiven Überlagerung des in der Signatursignalweiche 12 eingespeisten Signatursignals 13 ist in Fig. 14 in der Signatursignalbildung 5 ein vom Schaltsignalimpuls 16 gesteuerter Schalter 36 vorhanden. Durch diesen wird das Signatursignal 13 durch kurzzeitiges Umschalten impulsartig in den Signalweg der Empfangssignale 14 eingespeist, so dass die Momentanfrequenz des Signatursignals 13 von der im Moment des Impulses auftretenden Augenblicksfrequenz des Empfangssignals in der Zwischenfrequenzebene 27 um die Eigenfrequenz $f_S$ des Festfrequenzoszillators 43 impulsartig abweicht. Zur Darstellung der Allgemeinheit der Einsetzbarkeit der vorliegenden Erfindung ist in Figur 6 eine komplexe Antennenschalt-Einheit 31 gezeigt mit zwei Antennensignalumschaltern 15 und zwei HF-Signalzweigen 11a, 11b mit einem Signal-Combiner 33 zur gephasten Zusammenfassung von Antennensignalen und einer Schaltlogik 32 zur gezielten Einstellung der Antennenschalt-Einheit 31.

In einer besonders vorteilhaften Ausgestaltung der Erfindung wird das Signatursignal 13 bei Positionierung des Störungsdetektors 10 im Empfänger 4 in der Zwischenfrequenzebene auf ähnliche Weise aus dem Empfangssignal in der Zwischenfrequenzebene 27 abgeleitet, wie es oben durch Frequenzumsetzung der hochfrequenten Empfangssignale 14 geschildert wurde. In diesem Fall wird das Empfangssignal in der Zwischenfrequenzebene 27, wie in Fig. 15 dargestellt, nach dem ZF-Frequenzumsetzer 25 der Signatursignalbildung 5 zugeführt. In der Signatursignalbildung 5 befindet sich ein Frequenzumsetzer 50a, welcher die Zwischenfrequenz auf ähnliche Weise, wie es oben für den Frequenzumsetzer 50 abgeleitet wurde, um die Frequenz des Festfrequenzoszillators 43 verschiebt. Die 45-Grad-Phasendrehglieder 46 und 47 zur Ansteuerung der ersten Eingänge der beiden symmetrischen Mischer 44 sind demnach für die Zwischenfrequenz $f_Z$ zu gestalten. In einer weiteren vorteilhaften Anwendung der Erfindung sind die Signatursignalbildung 5 und die Signatursignalweiche 12 - wie in Figur 16 ausgestaltet - im Empfänger 4 untergebracht, der Störungsdetektor 10 befindet sich jedoch in einer Diversityeinheit 28 bzw. in der Antennenschalt-Einheit 31. Dabei werden die vom Störungsdetektor 10 abgegebenen Schaltsignalimpulse 16 über die Selektionseinrichtungen 2 und die HF-Leitung 6 zum Empfänger 4 geleitet und dort dem Schalter 36 in der Signatursignalweiche 12 zugeführt. Mit Auftreten eines Schaltsignalimpulses 16 in der Antennenschalt-Einheit 31 wird das Signatursignal 13 durch Umschalten des Schalters 36 über die Impulsdauer in den Kanal der Empfangssignale eingespeist, wodurch die Störausblendung initiiert wird.

In einer weiteren vorteilhaften Ausgestaltung der Erfindung wird die Signatursignalweiche 12 als Signalüberblendeinrichtung 52 zur stetigen Einblendung des Signatursignals 13 gestaltet. An Stelle der abrupten additiven beziehungsweise geschalteten Einspeisung des Signatursignals 13 ergibt sich dabei die Möglichkeit, die Anstiegszeit, den Impulsspitzenwert und die Impulsdauer des Frequenzstörhubimpulses gesondert einzustellen. Dieses Merkmal kann insbesondere in solchen Fällen von besonderer Bedeutung sein, wenn z. B. in einem FM-Rundfunkempfänger 4 eine Störunterdrückungsschaltung 8 unveränderbar vorgegeben ist. Um in einem solchen Fall die Störausblendung durch einen Frequenzstörhubimpuls sicher zu initiieren, kann es notwendig sein, eine bestimmte Kombination aus Anstiegszeit, Impulsspitzenwert und Impulsdauer einzustellen.

In einer aufgrund der wirtschaftlichen Realisierbarkeit vorteilhaften Weiterbildung der Erfindung wird bei einer Empfangsanlage nach Ansprüchen 4, 5, 7, 9, 14, 15 für den FM-Rundfunkempfang nach dem Überlagerungsprinzip mit Frequenzumsetzer 25, Oszillator 26 und FM-Demodulator 17 an Stelle der Einrichtungen zur Erzeugung des Signatursignals 13 der in den Figuren 3, 4, 7b, 11,6, 16 und in deren Zusammenhang beschriebenen Ausführungsformen der Erfindung ein Rauschgenerator 53 zur Erzeugung eines Rauschsignals als Signatursignals 13 eingesetzt. Das impulsartig gestaltete Signatursignal 13 wird, wie in den angegebenen Figuren und den Ansprüchen 4, 5, 7, 9, 14, 15, beschrieben, in der Signatursignalweiche 12 zur zeitlichen Markierung des darauf unmittelbar erfolgenden Umschaltvorgangs in den Signalweg der Empfangssignale 14 eingespeist. In Analogie zu den zitierten Ansprüchen wird die Impulsartigkeit des Signatursignals 13 zum Beispiel durch impulsartige Aktivierung des Rauschgenerators beziehungsweise durch impulsartige Überlagerung des Rauschsignals und des Empfangssignals bewirkt. Zur Erzeugung eines hinreichend großen Frequenzsprungs und somit eines hinreichend großen Impulses am Ausgang des FM-Demodulator 17 im Moment des Auftretens des auf diese Weise gebildeten Signatursignals 13 ist das Rauschsignal erfindungsgemäß mit hinreichend großem Pegel dem Empfangssignal zu überlagern. Erfindungsgemäß ist das Frequenzspektrum des Rauschsignals in der Weise zu wählen, dass es den Empfangsfrequenzbereich des FM-Rundfunks mindestens überdeckt. Auf diese Weise wird die Initiierung der Störausblendung in der Störunterdrückungsschaltung 8 anstelle des jeweils in den Ansprüchen 4, 5, 7, 9, 14, 15 beschriebenen Signatursignals 13 bewirkt.

**Liste der Bezeichnungen**

Diversity-Prozessor 1
Selektionseinrichtung 2
Antennen-Umschaltsignal 3
Empfänger 4
Signatursignalbildung 5
HF-Leitung 6
Frequenzselektive Pulsauswertung 7
Störunterdrückungsschaltung 8
ZF-Signal 9
Störungsdetektor 10
HF-Verstärker 11
HF-Signalzweig 11a, 11b
Signatursignalweiche 12
Signatursignal 13
Empfangssignal 14
Antennensignalumschalter 15
Schaltsignalimpulse 16
Demodulator, FM-Demodulator, Basisbandprozessor 17
Basisband-Signatursignal, Audio-Signal 18
Basisband-Signal nach Störunterdrückung 19
markiertes Empfangssignal, HF-Signal 20
Empfangskanalfilter, ZF-Filter 21
Empfangskanal-Signal 22
Signatursignal-Auswertung 23
Störausblendsignal 24
ZF-Frequenzumsetzer 25
Oszillator 26
Empfangssignale in der Zwischenfrequenzebene 27
Diversityeinheit 28
Oszillatorschwingung 29
Oszillatorfrequenzinformation 30
Antennenschalt-Einheit 31
Schaltlogik 32
Signal-Combiner 33
Impulsformer 34
Festfrequenz-Signalgenerator 35
Schalter 36
Mischer 37
Signatursignalträger 38
Abstimmbarer Oszillator 39
Rampenfunktionsgeber 40
Audioteil 41
Differenzierschaltung 42
Festfrequenzoszillator 43
symmetrischer Mischer 44
Verstärker 45
-45°-HF-Phasendrehglied 46
+45°-HF-Phasendrehglied 47
-45°-NF-Phasendrehglied 48
+45°-NF-Phasendrehglied 49
Frequenzumsetzer 50, 50a
Störausblendungs-Einheit 51
Signalüberblendeinrichtung 52

Rauschgenerator 53
Mehrantennen A1 ... AN
$f_H$ Hochfrequenzträger des Empfangskanals
fs Frequenzablage vom HF-Träger bzw. von der aktuellen Frequenz des Empfangssignals
$f_Z$ ZF-Trägerfrequenzträger des Empfangskanals
$f_N$ niederfrequente Modulation
$f_{hub}$ Frequenzhub der Modulation
$f_{NKo}$ Trägerfrequenz des oberen Nachbarkanals
$f_{NKu}$ Trägerfrequenz des unteren Nachbarkanals
$f_O$ Oszillatorfrequenz
$f_{Gen}$ Frequenz des Signalgenerators 35
$f_u$ unterste Frequenz des Rundfunk-Frequenzbandes
$\omega_{Index} = 2 * \pi * f_{Index}$ = betreffende Kreisfrequenz
$U_H$ Amplitude des Hochfrequenzträgers
$U_S$ Amplitude des Festfrequenzoszillator 43

**Patentansprüche**

1. Empfangsanlage mit einer Schaltungsanordnung zur Unterdrückung von Umschaltstörungen im Basisbandbereich eines Mehrantennen-Scanning-Diversity-Systems, wobei ein Diversity-Prozessor (1) vorhanden ist, dem eingangsseitig die Antennensignale zugeführt sind, welcher bei Vorliegen ungünstiger Empfangsbedingungen ein Antennen-Umschaltsignal (3) zum Umschalten auf ein anderes Antennensignal (A1,A2,...AN) erzeugt, mit einer im Basisbandteil befindlichen Störunterdrückungsschaltung (8), der Störausblendsignale zugeführt sind, die im Diversity-Prozessor (1) aus den Schaltsignalen zum Umschalten auf ein anderes Antennensignal (A1,A2,... AN) abgeleitet sind, wobei

   im Diversity-Prozessor (1) ein Störungsdetektor (10) zur Prüfung auf Störung im Empfangssignal (14) vorhanden ist, aus dessen Schaltsignalimpulsen (16) zum Umschalten auf ein anderes Antennensignal (A1,A2,...AN) ein impulsartiges Schaltsignal (13) veranlasst ist, welches in einer Signalweiche (12) in den Signalweg der Empfangssignale (14) eingespeist ist, wobei die Signalweiche (12) im Fluss der Empfangssignale (14) vor einem das Frequenzband begrenzenden Empfangskanalfilter (21) der Empfangsanlage eingefügt ist,

   **dadurch gekennzeichnet, dass**

   die Signalweiche eine Signatursignalweiche (12) ist, und dass das impulsartige Schaltsignal ein Signatursignal (13) ist, das im Empfangssignal (14) eine Störung hervorruft und dadurch den Zeitpunkt des Umschaltens markiert, und das zusammen mit dem Empfangssignal (14) das Empfangskanalfilter (21) durchläuft, und dass aus dem nach diesem Empfangskanalfilter (21) gebildeten Basisband-Signatursignal (18) die Störausblendung in der Störunterdrückungsschaltung (8) initiiert ist.

**2.** Empfangsanlage nach Anspruch 1,
**dadurch gekennzeichnet, dass**
unmittelbar nach der Initiierung der Störausblendung in der Störunterdrückungsschaltung (8) das Antennen-Umschaltsignal (3) des Störungsdetektors (10) an den Antennensignalumschalter (15) ergeht und die Impulsdauer $t_i$ des impulsartigen Signatursignals (13) kleiner ist als die Zeitdauer $t_A$ der Störausblendung.

**3.** Empfangsanlage nach Anspruch 1oder 2,
**dadurch gekennzeichnet, dass**
das Signatursignal (13) im Diversity-Prozessor (1) in einer Einrichtung zur Signatursignalbildung (5) gebildet und durch einen Schaltsignalimpuls (16) angesteuert ist, wobei Letzterer in Verbindung mit dem gegenüber dem Signatursignal (13) retardierten Antennen-Umschaltsignal (3) bei Vorliegen ungünstiger Empfangsbedingungen auftritt.

**4.** Empfangsanlage nach Anspruch 1, 2 oder 3,
für den Empfang frequenzmodulierter Tonsignale nach dem Überlagerungsprinzip mit Frequenzumsetzer (25), Oszillator (26) und FM-Demodulator (17),
**dadurch gekennzeichnet, dass**
das Empfangskanalfilter (21) als ZF-Filter (21) ausgeführt ist und dem Diversity-Prozessor (1) das ZF-Signal (9) zur Prüfung auf Störung im Empfangssignal (14) zugeführt ist und dem ZF-Filter (21) der FM-Demodulator (17) und diesem wiederum eine Störausblendungs-Einheit (51) nachgeschaltet ist, welcher eingangsseitig das Audio-Signal mit Signatur (18) zugeführt ist, welches zum einen der in ihr befindlichen Störunterdrückungsschaltung (8) und zum anderen der ebenfalls darin befindlichen Signatursignal-Auswertung (23) zugeleitet ist, und das am Ausgang der Signatursignal-Auswertung (23) vorliegende Störausblendsignal (24) zur Auslösung der Störausblendung der Störunterdrückungsschaltung (8) zugeführt ist und somit am Ausgang der Störausblendungs-Einheit (51) das von Schaltstörungen bereinigte Audiosignal vorliegt.

**5.** Empfangsanlage nach Anspruch 4,
**dadurch gekennzeichnet, dass**
im Diversity-Prozessor (1) der Antennensignalumschalter (15), die Einrichtung zur Signatursignalbildung (5) und die Signatursignalweiche (12) enthalten sind und mit einer Selektionseinrichtung (2) zu einer Diversityeinheit (28) zusammengefasst sind, an welche einerseits Antennen (A1,A2,... AN) und andererseits eine HF-Leitung (6), welche zu einem Empfänger (4) führt, angeschlossen ist, und am Eingang des Empfängers (4) ebenfalls eine Selektionseinrichtung (2) vorhanden ist, worüber das ZF-Signal (9) auf die HF-Leitung (6) eingekoppelt ist und bei der in der Diversityeinheit (28) befindlichen Selektionseinrichtung (2) ausgekoppelt und dem Störungsdetektor (10) zugeführt ist.

**6.** Empfangsanlage nach Anspruch 5,
**dadurch gekennzeichnet, dass**
über die in der Diversityeinheit (28) und dem Empfänger (4) befindlichen Selektionseinrichtungen (2) neben dem ZF-Signal (9) auch die Oszillatorschwingung (29) des Oszillators (26) selektiv ein- und ausgekoppelt und der Signatursignalbildung (5) zur Bildung eines Signatursignals (13) zugeleitet ist.

**7.** Empfangsanlage nach Anspruch 1,
**dadurch gekennzeichnet, dass**
das Signatursignal (13) als eine sinusförmige Schwingung als Signatursignalträger (38) mit einem Frequenzabstand ($f_S$) zur aktuellen Frequenz der HF-Trägerschwingung ($f_H$) des Empfangskanals gebildet ist und der Signatursignalträger (38) dem Empfangssignal (14) in der Signatursignalweiche (12) über einen durch die Schaltsignalimpulse (16) gesteuerten Schalter (36) impulsartig aufgeprägt ist und somit ein Frequenzstörhubimpuls im markierten Empfangssignal (20) enthalten ist.

**8.** Empfangsanlage nach Anspruch 4,
**dadurch gekennzeichnet, dass**
in der Einrichtung zur Signatursignalbildung (5) ein Signalgenerator (35) und ein Frequenzmischer (37) vorhanden sind, dem die Oszillatorschwingung (29) des Oszillators (26) und das Ausgangssignal des Signalgenerators (35) zugeführt sind und die Frequenz des Signalgenerators (35) basierend auf der Kenntnis der Zwischenfrequenz und der Frequenzablage des am Ausgang des Frequenzmischers (37) vorliegenden Signatursignalträgers (38) vom Hochfrequenzträger des Empfangskanals fest eingestellt ist und der Signatursignalträger (38) dem Empfangssignal (14) in der Signatursignalweiche (12) über einen durch die Schaltsignalimpulse (16) gesteuerten Schalter (36) impulsartig additiv aufgeprägt ist, so dass am Ausgang des FM-Demodulators (17) aufgrund des dadurch entstehenden Frequenzsprungimpulses in einer in der Störausblendungs-Einheit (51) befindlichen Differenzierschaltung (42) ein Impuls als Störausblendsignal (24) abgeleitet ist.

**9.** Empfangsanlage nach Anspruch 8,
**dadurch gekennzeichnet, dass**
in der Einrichtung zur Signatursignalbildung (5) - ausgelöst durch einen Schaltsignalimpuls (16) durch alternierendes Schließen und Öffnen des Schalters (36) - eine Pulsreihe mit vorgegebener Pulsfrequenz erzeugt ist und in der Störausblendungs-Einheit (51) eine frequenzselektive Pulsauswertung (43) und ein Pulsformer (34) zur Gestaltung des Störausblendsignals (24) vorhanden sind.

**10.** Empfangsanlage nach Anspruch 7,
**dadurch gekennzeichnet, dass**
in der Einrichtung zur Signatursignalbildung (5) ein Frequenzumsetzer (50) und ein Festfrequenzoszillator (43) mit der Eigenfrequenz $f_S$ vorhanden sind, welcher das Empfangssignal (14) und das Ausgangssignal des Festfrequenzoszillators (43) zugeführt sind und das am Ausgang der Signatursignalbildung (5) gebildete Signatursignal (13) durch das um die Frequenzablage $f_S$ versetzte Empfangssignal (14) gebildet ist, und ein vom Schaltsignalimpuls (16) gesteuerter Schalter (36) vorhanden ist, durch welchen das Signatursignal (13) impulsartig in den Signalweg der Empfangssignale (14) eingespeist ist, so dass die Momentanfrequenz des Signatursignals (13) von der im Moment des Impulses auftretenden Augenblicksfrequenz des Empfangssignals (14) um die Eigenfrequenz $f_S$ des Festfrequenzoszillators (43) impulsartig abweicht.

**11.** Empfangsanlage nach Anspruch 10,
**dadurch gekennzeichnet, dass**
der Frequenzumsetzer (50) aus zwei symmetrischen Mischern (44) gebildet ist, deren erstem Eingang jeweils das Empfangssignal (14) zugeführt ist, wobei diese Empfangssignale (14) jedoch an den beiden ersten Eingängen zueinander um den Phasenwinkel von etwa $\pi/2$ verschoben sind und deren zweitem Eingang jeweils das Ausgangssignal des Festfrequenzoszillators (43) zugeführt ist, wobei diese Signale jedoch ebenfalls zueinander um den Phasenwinkel von etwa $\pi/2$ verschoben sind und das Signatursignal (13) durch Addition der Ausgangssignale der beiden symmetrischen Mischer (44) gebildet ist.

**12.** Empfangsanlage nach Anspruch 11,
**dadurch gekennzeichnet, dass**
der an den ersten Eingängen der beiden symmetrischen Mischer (44) herrschende Phasenunterschied des Empfangssignals (14) von $\pi/2$ mit Hilfe eines -45°-HF-Phasendrehglieds (46) bei dem einen und mit Hilfe eines +45°-HF-Phasendrehglieds (47) bei dem anderen der beiden symmetrischen Mischer (44) bewirkt ist und in Analogie hierzu der an den zweiten Eingängen der beiden symmetrischen Mischer (44) herrschende Phasenunterschied des Signals des Festfrequenzoszillators (43) von $\pi/2$ mit Hilfe eines -45°-NF-Phasendrehglieds (48) bei dem einen und mit Hilfe eines +45°-NF-Phasendrehglieds (49) bei dem anderen der beiden symmetrischen Mischer (44) bewirkt ist und die 45°-HF-Phasendrehglieder (46, 47) aus RC-Gliedern gebildet sind, bei denen $\pi/4$-Phasenbedingung etwa bei der Mittenfrequenz des FM-Frequenzbandes erfüllt ist.

**13.** Empfangsanlage nach Anspruch 12,
**dadurch gekennzeichnet, dass**

die Signalverstärkung im Frequenzumsetzer (50) derart gewählt ist, dass die Amplitude des Signatursignals (13) der Amplitude der hochfrequenten Schwingung im Empfangssignal (14) gleich ist, so dass mit dem Auftreten des Signatursignals (13) im Signal am Ausgang der Signatursignalweiche (12) lediglich der Frequenzhubimpuls aber kein Amplitudensprung verbunden ist.

**14.** Empfangsanlage nach Anspruch 4,
**dadurch gekennzeichnet, dass**
der Störungsdetektor (10), eine Einrichtung zur Signatursignalbildung (5) und die Signatursignalweiche (12) im Empfänger (4) untergebracht sind, wobei Letztere in der Zwischenfrequenzebene (27) vor dem ZF-Filter (21) eingebracht ist, und in der Einrichtung zur Signatursignalbildung (5) ein Signalgenerator (35) vorhanden ist, dessen Schwingfrequenz die Frequenzablage ($f_S$) vom Zwischenfrequenzträger ($f_Z$) besitzt und dessen Schwingungen initiiert durch Schaltsignalimpulse (16) über den Schalter (36) in der Signatursignalweiche (12) dem Empfangssignal in der Zwischenfrequenzebene (27) impulsförmig additiv überlagert ist.

**15.** Empfangsanlage nach Anspruch 12,
**dadurch gekennzeichnet, dass**
der Störungsdetektor (10), die Einrichtung zur Signatursignalbildung (5) und die Signatursignalweiche (12) im Empfänger (4) untergebracht sind, wobei Letztere in einer Zwischenfrequenzebene (27) vor einem ZF-Filter (21) eingebracht sind und der Einrichtung zur Signatursignalbildung (5) das Empfangssignal in der Zwischenfrequenzebene (27) zugeführt ist und die Phasendrehglieder (46, 47) zur Ansteuerung der beiden ersten Eingänge der beiden symmetrischen Mischer (44) für die ZF-Trägerfrequenz des ZF-Empfangskanals gestaltet sind.

**Claims**

**1.** A reception system having a circuit arrangement for reducing switch over interferences in the baseband range of a multiple antenna scanning diversity system, wherein a diversity processor (1) is present to which the antenna signals are supplied at the input side and which generates an antenna switching signal (3) for switching to a different antenna signal (A1, A2, ... AN) on the presence of unfavorable reception conditions, having an interference suppression circuit (8) located in the baseband portion to which interference blanking signals are supplied which are derived from the switching signals in the diversity processor (1) for switching over to a different antenna signal (A1, A2, ... AN), wherein
an interference detector (10) is present in the diversity processor (1) for checking for interference in the received signal (14) from whose switching signal pulses (16) a pulse-like switch signal (13) is actuated for switching over to a different antenna signal (A1, A2, ... AN), said switch signal being fed in a signal splitter (12) into the signal path of the received signals (14), with the signal splitter (12) being inserted in the flow of the received signals (14) before a reception channel filter (21) of the reception system limiting the frequency band,
**characterized in that**
the signal splitter is a signature signal splitter (12); and **in that** the pulse-like switch signal is a signature signal (13) which causes an interference in the received signal (14) and thereby marks the time of switching over and which runs through the reception channel filter (21) together with the received signal (14); and **in that** the interference blanking in the interference suppression circuit (8) is initiated from the baseband signature signal (18) formed after this reception channel filter (21).

2. A reception system in accordance with claim 1,
**characterized in that**
the antenna switching signal (3) of the interference detector (10) is issued to the antenna signal switchover switch (15) directly after the initiation of the interference blanking in the interference suppresion circuit (8) and the pulse duration $t_i$ of the pulse-like signature signal (13) is smaller than the time duration $t_A$ of the interference blanking.

3. A reception system in accordance with claim 1 or claim 2,
**characterized in that**
the signature signal (13) in the diversity processor (1) is formed in a device for signature signal formation (5) and is controlled by a switch signal pulse (16), with the latter occurring in connection with the antenna switching signal (3) retarded with respect to the signature signal (13) on the presence of unfavorable reception conditions.

4. A reception system in accordance with claim 1, claim 2 or claim 3, for the reception of frequency-modulated audio signals in accordance with the superposition principle having a frequency converter (25), an oscillator (26) and an FM demodulator (17),
**characterized in that**
the reception channel filter (21) is designed as an IF filter (21) and the IF signal (9) is supplied to the diversity processor (1) to check for interference in the received signal (14) and the FM demodulator is connected downstream of the IF filter and in turn has an interference blanking unit (51) connected downstream of it to which the audio signal with the signature (18) is supplied, said audio signal being forwarded, on the one hand, to the interference suppression circuit (8) located in it and, on the other hand, to the signature signal evaluation (23) likewise located in it, and the interference blanking signal (24) present at the output of the signature signal evaluation (23) is supplied to the interference suppression circuit (8) to trigger the interference blanking and the audio signal adjusted for switch interference is thus present at the output of the interference blanking unit (51).

5. A reception system in accordance with claim 4,
**characterized in that**
the antenna signal switchover switch (15), the device for the signature signal formation (5) and the signature signal splitter (12) are included in the diversity processor (1) and are combined with a selection device (2) to form a diversity unit (28) to which, on the one hand, antennas (A1, A2, ... AN) and, on the other hand, an RF line (6) which leads to a receiver (4) are connected and a selection device (2) is likewise present at the input of the receiver (4) via which selection device the IF signal (9) is coupled to the RF line (6) and is decoupled and supplied to the interference detector (10) with the selection device (2) located in the diversity unit (28).

6. A reception system in accordance with claim 5,
**characterized in that**
the oscillator oscillation (29) of the oscillator (26) is also selectively coupled and decoupled, in addition to the IF signal (9), and is forwarded via the selection devices (2) located in the diversity unit (28) and in the receiver (4) to the signature signal formation (5) to form a signature signal (13).

7. A reception system in accordance with claim 1,
**characterized in that**
the signature signal (13) as a sinusoidal oscillation is formed as a signature signal carrier (38) having a frequency separation ($f_S$) for the current frequency of the RF carrier oscillation ($f_H$) of the reception channel and the signature signal carrier (38) is imparted in the manner of a pulse to the received signal (14) in the signature signal splitter (12) via a switch (36) controlled by the switch signal pulses (16) and a frequency unwanted deviation pulse is thus included in the marked received signal (20).

8. A reception system in accordance with claim 4,
**characterized in that**
a signal generator (35) and a frequency mixer (37) are present in the device for the signature signal formation (5), to which frequency mixer the oscillator oscillation (29) of the oscillator (26) and the output signal of the signal generator (35) are supplied, and the frequency of the signal generator (35) is fixedly set on the basis of the knowledge of the intermediate frequency and of the frequency offset of the signature signal carrier (38) from the radio frequency carrier of the reception channel present at the output of the frequency mixer (37) and the signature signal carrier (38) is additively imparted in a pulse-like manner to the received signal (14) in the signature signal splitter (12) via a switch (36) controlled by the switch signal pulses (16) so that a pulse is derived as an interference blanking signal (24) at the output of the FM demodulator (17) based on the frequency jumping pulse thereby arising in a differentiation circuit (42) located in the interference suppression unit (51).

9. A reception system in accordance with claim 8,
**characterized in that**
a pulse series having a predefined pulse frequency is generated in the device for the signature signal formation (5) - triggered by a switch signal pulse (16) by an alternating opening and closing of the switch (36) - and a frequency-selective pulse evaluation (43) and a chopper (34) are present in the interference blanking unit (5) to form the interference blanking signal (24).

10. A reception system in accordance with claim 7,
**characterized in that**
a frequency converter (50) and a fixed frequency oscillator (43) having the natural frequency $f_S$ are present in the device for the signature signal formation (5) to which the received signal (14) and the output signal of the fixed frequency oscillator (43) are supplied and the signature signal (13) formed at the output of the signature signal formation (5) is formed by the received signal (14) displaced by the frequency offset $f_s$ and a switch (36) is present which is controlled by the switch signal pulse (16) and by which the signature signal (13) is fed in a pulse-like manner into the signal path of the received signals (14) so that the instantaneous frequency of the signature signal (13) differs in a pulse-like manner by the natural frequency $f_S$ of the fixed frequency oscillator (43) from the instantaneous frequency of the received signal (14) occurring at the instant of the pulse.

11. A reception system in accordance with claim 10,
**characterized in that**
the frequency converter (50) is formed from two symmetrical mixers (44) to whose first inputs the received signal (14) is respectively supplied, with these received signals (14), however, being displaced from one another at the two first inputs by the phase angle of approximately $\pi/2$ and to whose second inputs the output signal of the fixed frequency oscillator (43) is respectively supplied, with these signals, however, likewise being displaced from one another by the phase angle of approximately $\pi/2$ and with the signature signal (13) being formed by addition of the output signals of the two symmetrical mixers (44).

12. A reception system in accordance with claim 11,
**characterized in that**
the phase difference of the received signal (14) of $\pi/2$ present at the first inputs of the two symmetrical mixers (44) is effected with the aid of a -45° RF phase rotation element (46) at the one of the two symmetrical mixers (44) and with the aid of a +45° RF phase rotation element (47) at the other one of the two symmetrical mixers (44) and, analog hereto, the phase difference of the signal of the fixed frequency oscillator (43) of $\pi/2$ present at the second inputs of the two symmetrical mixers (44) is effected with the aid of a -45° AF phase rotation element (48) at the one of the two symmetrical mixers (44) and is effected with the aid of a +45° AF phase rotation element (49) at the other one of the two symmetrical mixers (44) and the 45° RF phase rotation elements (46, 47) are formed from RC members at which the $\pi/4$ phase condition is satisfied approximately at the center frequency of the FM frequency band.

13. A reception system in accordance with claim 12,
**characterized in that**
the signal amplification in the frequency converter (50) is selected such that the amplitude of the signature signal (13) is equal to the amplitude of the radio frequency oscillation in the received signal (14) so that only the frequency deviation pulse, but not any amplitude jump, is present on the occurrence of the signature signal (13) in the signal at the output of the signature signal splitter (12).

14. A reception system in accordance with claim 4,
**characterized in that**
the interference detector (10), a device for the signature signal formation (5) and the signature signal splitter (12) are accommodated in the receiver (4), with the latter being introduced in the intermediate frequency plane (27) before the IF filter (21) and with a signal generator (35) being present in the device for the signature signal formation (5) whose oscillation frequency has the frequency offset ($f_S$) of the intermediate frequency carrier ($f_Z$) and whose oscillations initiated by switch signal pulses (16) via the switch (36) in the signature signal splitter (12) are additively superposed in a pulse-like manner on the received signal in the intermediate frequency plane (27).

15. A reception system in accordance with claim 12,
**characterized in that**
the interference detector (10), the device for the signature signal formation (5) and the signature signal splitter (12) are accommodated in the receiver (4), with the latter being introduced in an intermediate frequency plane (27) before an IF filter (21) and the received signal in the intermediate frequency plane (27) is supplied to the device for the signature signal formation (5) and the phase rotation elements (46, 47) are designed for controlling the two first inputs of the two symmetrical mixers (44) for the IF carrier frequency of the IF reception channel.

**Revendications**

1. Installation de réception avec un montage pour la suppression d'interférences de commutation dans la plage de bande de base d'un système de diversité multi-antennes à balayage de signaux, un processeur de diversité (1) étant présenté, lequel reçoit les signaux d'antenne à son entrée et, en cas de mauvaises conditions de réception, génère un signal de commutation d'antenne (3) pour une commutation vers un autre signal d'antenne (A1, A2, ...AN), un circuit de suppression d'interférences (8) se trouvant dans la partie de bande de base, lequel reçoit des signaux de suppression d'interférences dérivés, dans le processeur de diversité (1), des signaux de commutation pour la commutation vers un autre signal d'antenne (A1, A2, ... AN), un détecteur de parasites (10) étant présenté dans le processeur de diversité (1) pour le contrôle de perturbation dans le signal de réception (14), dont les impulsions de signal de commutation (16) pour la commutation vers un autre signal d'antenne (A1, A2, ...AN) induisent un signal de commutation (13) à impulsions acheminé sur le trajet des signaux de réception (14) dans un séparateur de signaux (12), ledit séparateur de signaux (12) étant inséré en amont d'un filtre de canal de réception (21) de l'installation de réception limitant la bande de fréquences dans le flux des signaux de réception (14),
**caractérisée en ce que** :

le séparateur de signaux est un séparateur de signaux de signature (12), et **en ce que** le signal de commutation à impulsions est un signal de signature (13) provoquant une perturbation dans le signal de réception (14) et marquant ainsi le moment de commutation, et traversant le filtre de canal de réception (21) conjointement avec le signal de réception (14), et **en ce que** la suppression d'interférence est déclenchée dans le circuit de suppression d'interférences (8) à partir du signal de signature (18) de bande de base formé après ledit filtre de canal de réception (21).

2. Installation de réception selon la revendication 1, **caractérisée en ce que** :

immédiatement après le déclenchement de la suppression d'interférence dans le circuit de suppression d'interférences (8), le signal de commutation d'antenne (3) du détecteur de parasites (10) est acheminé vers le commutateur de signal d'antenne (15) et la durée d'impulsion $t_i$ du signal de signature (13) à impulsions est inférieure à la durée $t_A$ de la suppression d'interférence.

3. Installation de réception selon la revendication 1 ou 2, **caractérisée en ce que** :

le signal de signature (13) du processeur de diversité (1) est formé dans un dispositif de formation (5) de signaux de signature et est commandé par une impulsion de signal de commutation (16), celle-ci apparaissant en relation avec le signal de commutation d'antenne (3) retardé par rapport au signal de signature (13), en cas de mauvaises conditions de réception.

4. Installation de réception selon la revendication 1, 2 ou 3, pour la réception de signaux audio modulés en fréquence conformément au principe d'impulsion superposée avec convertisseur de fréquence (25), oscillateur (26) et démodulateur FM (17),
**caractérisée en ce que** :

le filtre de canal de réception (21) est réalisé comme filtre FI (21), et le signal FI (9) est acheminé vers le processeur de diversité (1) pour le contrôle de perturbation dans le signal de réception (14), et le démodulateur FM (17) est placé en aval du filtre FI (21), ainsi qu'une unité de suppression d'interférences (51) vers l'entrée de laquelle est acheminé le signal audio à signature (18), lequel est d'une part conduit vers le circuit de suppression d'interférences (8) qui s'y trouve et d'autre part vers l'analyse (23) de signal de signature qui s'y trouve aussi, et le signal de suppression d'interférences (24) présenté à la sortie de l'analyse (23) de signal de signature est transmis au circuit de suppression d'interférences (8) pour le déclenchement de la suppression d'interférence, le signal audio débarrassé des perturbations de communication étant ainsi présenté à la sortie de l'unité de suppression d'interférences (51).

5. Installation de réception selon la revendication 4, **caractérisée en ce que** :

le dispositif de formation (5) de signaux de signature et le séparateur de signaux de signature (12) sont contenus dans le processeur de diversité (1) du commutateur de signal d'antenne (15), et sont regroupés avec un dispositif de sélection (2) pour former une unité de diversité (28) à laquelle sont raccordées des antennes (A1, A2, ... AN), d'une part, et une ligne HF (6), d'autre part, laquelle mène à un récepteur (4), et un dispositif de sélection (2) est également présenté à l'entrée du récepteur (4), au moyen duquel le signal FI (9) est couplé à la ligne HF (6) et découplé au niveau du dispositif de sélection (2) se trouvant dans l'unité de diversité (28) et transmis au détecteur de parasites (10).

6. Installation de réception selon la revendication 5, **caractérisée en ce que** :

outre le signal FI (9), la vibration (29) d'oscillateur est elle aussi sélectivement couplée aux oscillateurs (26) et découplée de ceux-ci au moyen des dispositifs de sélection (2) se trouvant dans l'unité de diversité (28) et le récepteur (4), et transmise à la formation (5) du signal de signature pour la formation d'un signal de signature (13).

7. Installation de réception selon la revendication 1, **caractérisée en ce que** :

le signal de signature (13) est formé comme vibration sinusoïdale en tant que porteuse (38) de signal de signature avec un écart de fréquence ($f_S$) à la fréquence actuelle de la vibration de porteuse HF ($f_H$) du canal de réception, et la porteuse (38) de signal de signature imprime des impulsions au signal de réception (14) dans le séparateur de signaux de signature (12) au moyen d'un commutateur (36) commandé par les impulsions de signal de commutation (16), une impulsion de balayage de fréquence étant ainsi contenue dans le signal de réception (20) marqué.

8. Installation de réception selon la revendication 4, **caractérisée en ce que** :

dans le dispositif de formation (5) de signaux de signature sont présentés un générateur de signaux (35) et un mélangeur de fréquences (37) vers lequel sont acheminés la vibration (29) de l'oscillateur (26) et le signal de sortie du générateur de signaux (35), et la fréquence du générateur de signaux (35) est fixement réglée par la porteuse RF du canal de réception sur la base de la connaissance de la fréquence intermédiaire et de la dérive de fréquence de la porteuse (38) de signal de signature présentée à la sortie du mélangeur de fréquences (37), et la porteuse (38) de signal de signature imprime additionnellement des impulsions au signal de réception (14) dans le séparateur de signaux de signature (12) au moyen d'un commutateur (36) commandé par les impulsions de signal de commutation (16), si bien qu'une impulsion est dérivée comme signal de suppression d'interférences (24) à la sortie du démodulateur FM (17) en raison de l'impulsion de saut de fréquence ainsi générée dans un circuit dérivateur (42) se trouvant dans l'unité de suppression d'interférences (51).

9. Installation de réception selon la revendication 8, **caractérisée en ce que** :

une séquence d'impulsions à fréquence d'impulsion prescrite est générée dans le dispositif de formation (5) de signaux de signature - déclenchée par une impulsion de signal de commutation (16) au moyen d'une ouverture et d'une fermeture alternées du commutateur (36), et une analyse d'impulsions (43) à sélection de fréquence et un formeur d'impulsions (34) pour la configuration du signal de suppression d'interférences (24) sont présentés dans l'unité de suppression d'interférences (51).

10. Installation de réception selon la revendication 7, **caractérisée en ce que** :

sont présentés, dans le dispositif de formation (5) de signaux de signature, un convertisseur de fréquence (50) et un oscillateur à fréquence fixe (43) avec la fréquence propre $f_s$, vers lequel sont acheminés le signal de réception (14) et le signal de sortie de l'oscillateur à fréquence fixe (43), et le signal de signature (13) formé à la sortie de la formation (5) du signal de signature est formé par le signal de réception (14) décalé de la dérive de fréquence $f_s$, et un commutateur (36) commandé par l'impulsion de signal de commutation (16) est présenté, lequel transmet par impulsions le signal de signature (13) sur le trajet des signaux de réception (14), si bien que la fréquence instantanée du signal de signature (13) diffère en impulsions de la fréquence propre $f_s$ de l'oscillateur à fréquence fixe (43) par rapport à la fréquence momentanée du signal de réception (14) apparaissant au moment de l'impulsion.

11. Installation de réception selon la revendication 10, **caractérisée en ce que** :

le convertisseur de fréquence (50) est formé de deux mélangeurs (44) symétriques, dont chaque première entrée reçoit le signal de réception (14), les signaux de réception (14) étant toutefois décalés l'un par rapport à l'autre aux deux premières entrées, d'un angle de phase de n/2 environ, et dont chaque deuxième entrée reçoit le signal de sortie de l'oscillateur à fréquence fixe (43), les signaux étant toutefois eux aussi décalés l'un par rapport à l'autre d'un angle de phase de n/2 environ, et le signal de signature (13) est formé par addition des signaux de sortie des deux mélangeurs (44) symétriques.

**12.** Installation de réception selon la revendication 11, **caractérisée en ce que** :

la différence de phase de n/2 du signal de réception (14) présentée aux premières entrées des deux mélangeurs (44) symétriques est provoquée au moyen d'un déphaseur HF de -45° (46) pour le premier mélangeur, et au moyen d'un déphaseur HF de +45° (47) pour l'autre des deux mélangeurs (44) symétriques, et, par analogie, la différence de phase de n/2 du signal de l'oscillateur à fréquence fixe (43) présentée aux deux entrées des deux mélangeurs (44) symétriques est provoquée au moyen d'un déphaseur HF de -45° (48) pour le premier mélangeur, et au moyen d'un déphaseur HF de +45° (49) pour l'autre des deux mélangeurs (44) symétriques, et les déphaseurs HF de 45° (46, 47) sont formés par des éléments RC où la condition de phase $\pi/4$ est sensiblement satisfaite à la fréquence centrale de la bande de fréquences FM.

**13.** Installation de réception selon la revendication 12, **caractérisée en ce que** :

l'amplification de signal dans le convertisseur de fréquence (50) est sélectionnée de manière que l'amplitude du signal de signature (13) est égale à l'amplitude de la vibration à haute fréquence dans le signal de réception (14), si bien que seule l'impulsion de balayage de fréquence est liée à l'apparition du signal de signature (13) dans le signal à la sortie du séparateur de signaux de signature (12), mais à aucun saut d'amplitude.

**14.** Installation de réception selon la revendication 4, **caractérisée en ce que** :

le détecteur de parasites (10), un dispositif de formation (5) de signaux de signature et le séparateur de signaux de signature (12) sont disposés dans le récepteur (4), ledit séparateur de signaux de signature étant monté sur un niveau de fréquence intermédiaire (27) en amont du filtre FI (21), et un générateur de signaux (35) est présenté dans le dispositif de formation (5) de signaux de signature, dont la fréquence de vibration présente la dérive de fréquence ($f_s$) par rapport à la porteuse de fréquence intermédiaire ($f_z$) et dont les vibrations induites par des impulsions de signal de commutation (16) sont additionnellement superposées au signal de réception sur le niveau de fréquence intermédiaire (27) dans le séparateur de signaux de signature (12), au moyen du commutateur (36).

**15.** Installation de réception selon la revendication 12, **caractérisée en ce que** :

le détecteur de parasites (10), le dispositif de formation (5) de signaux de signature et le séparateur de signaux de signature (12) sont disposés dans le récepteur (4), ledit séparateur de signaux de signature étant monté sur un niveau de fréquence intermédiaire (27) en amont d'un filtre FI (21), et le signal de réception sur le niveau de fréquence intermédiaire (27) est acheminé vers le dispositif de formation (5) de signaux de signature, et les déphaseurs (46, 47) sont configurés pour la commande des deux premières entrées des deux mélangeurs (44) symétriques pour la fréquence de porteuse FI du canal de réception FI.

Fig. 1

Fig. 2

Fig. 3

Fig. 4

EP 2 023 505 B1

Fig. 5

Fig. 6

EP 2 023 505 B1

Fig. 7

Fig. 9

Fig. 8

Fig. 10

Fig. 11

Fig. 12

EP 2 023 505 B1

Frequenzabweichung in kHz: 1kHz NF-Signal mit getriggertem Frequenzhubimpuls

b)

Zeit in μsec

a)

Fig.13

EP 2 023 505 B1

Fig. 14

Fig. 15

Fig. 16

**EP 2 023 505 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3517247 A1
- DE 3517247
- DE 4204490